# EUROPEAN PATENT APPLICATION

(11) **EP 4 628 242 A1**
(43) Date of publication of application: **08.10.2025**
(21) Application number: 24890582.0
(22) Date of filing: 08.11.2024
(51) Int. Cl.: B23K 26/00

(54) **LASER PROCESSING METHOD AND APPARATUS, AND DEVICE, PROCESSING DEVICE AND STORAGE MEDIUM**

(30) Priority: 16.11.2023 CN 202311529640; 08.01.2024 CN 202410024711; 08.01.2024 CN 202410024752; 08.01.2024 CN 202410024792
(71) Applicant: Shenzhen Han's Semiconductor Equipment Technology Co., Ltd., Shenzhen, Guangdong 518000 (CN)
(72) Inventor: REN, Da, Chongqing Rd. Heping Community, Fuhai Subdistrict, Bao'an District Shenzhen, Guangdong 518000 (CN); WENG, Mingjie, Chongqing Rd. Heping Community, Fuhai Subdistrict, Bao'an District Shenzhen, Guangdong 518000 (CN); QIU, Xiuyuan, Chongqing Rd. Heping Community, Fuhai Subdistrict, Bao'an District Shenzhen, Guangdong 518000 (CN); WANG, Bo, Chongqing Rd. Heping Community, Fuhai Subdistrict, Bao'an District Shenzhen, Guangdong 518000 (CN); LI, Qian, Chongqing Rd. Heping Community, Fuhai Subdistrict, Bao'an District Shenzhen, Guangdong 518000 (CN); WU, Lijie, Chongqing Rd. Heping Community, Fuhai Subdistrict, Bao'an District Shenzhen, Guangdong 518000 (CN); YIN, Jiangang, Chongqing Rd. Heping Community, Fuhai Subdistrict, Bao'an District Shenzhen, Guangdong 518000 (CN)
(74) Representative: Gill Jennings & Every LLP
(86) International application number: PCT/CN2024/130820
(87) International publication number: WO 2025/103226

(57) **Abstract**

The present disclosure is applied to the field of laser processing technologies, and provides a laser processing method, an apparatus, a device, a processing device, and a storage medium. The laser processing method includes: focusing first laser inside a workpiece to form one or more modified traces inside the workpiece; and irradiating the modified traces with second laser to form absorption traces, so as to enable crack generation inside the workpiece. Absorptance to the second laser in the modified traces is greater than absorptance to the second laser in a region outside the modified traces. According to the laser processing method provided in embodiments of the present disclosure, the length of the longitudinal component of the crack can be controlled.

## Description

### TECHNICAL FIELD

The present disclosure belongs to the field of laser processing technologies, and in particular to a laser processing method, an apparatus, a device, a processing device, and a storage medium.

### BACKGROUND

Third-generation semiconductor silicon carbide (SiC) has excellent physical properties such as a wide bandgap, high critical breakdown field strength, and high thermal conductivity, making it an ideal substrate material for manufacturing power devices and radio frequency devices.

During manufacturing a silicon carbide (SiC) substrate, a silicon carbide ingot is required to be cut into thin silicon carbide dies. In addition, the silicon carbide substrate is required to be thinned in manufacturing of a silicon carbide device. A current processing solution is to use pulsed laser for silicon carbide crystal peeling and wafer thinning.

A silicon carbide ingot currently used in the semiconductor manufacturing industry is an off-axis silicon carbide crystal. A top surface of the off-axis silicon carbide crystal is not parallel to a C-plane, and a small angle α is formed between the top surface and the C-plane. α is generally 4°. The C-plane is (0001) crystal plane of silicon carbide and is a cleavage plane with minimum fracture toughness. When a crack is generated in silicon carbide under the action of laser, the crack can fluctuate up and down along the C-plane. It is relatively difficult to control the length of the component of the crack in the longitudinal direction (i.e., the thickness direction or the height direction) of the silicon carbide ingot.

### SUMMARY

Embodiments of the present disclosure provide a laser processing method, an apparatus, a device, a processing device, and a storage medium, which can control the length of the longitudinal component of the crack.

In a first aspect, embodiments of the present disclosure provide a laser processing method, including:
focusing first laser inside a workpiece to form one or more modified traces inside the workpiece; and
irradiating the modified traces with second laser to form absorption traces, so as to enable crack generation inside the workpiece;
absorptance to the second laser in the modified traces being greater than absorptance to the second laser in a region outside the modified traces.

In a possible implementation of the first aspect, the workpiece has a C-plane;
focusing the first laser inside the workpiece to form one or more modified traces inside the workpiece includes:
moving the first laser relative to the workpiece along a first path and focusing the first laser inside the workpiece to form the modified traces inside the workpiece;
irradiating the modified traces with the second laser to form absorption traces, so as to enable crack generation inside the workpiece includes:
   moving the second laser relative to the workpiece along a second path, irradiating the modified traces with the second laser to form the absorption traces, and changing columns and continuously irradiating different modified traces with the second laser along the second path to form the absorption traces, so as to enable crack generation inside the workpiece along the C-plane;
   the first laser and the second laser are different; and
   the first path intersects the second path.

In a possible implementation of the first aspect, the workpiece is a crystalline material having a crystal orientation;
moving the second laser relative to the workpiece along the second path includes:
moving the second laser relative to the workpiece along a direction parallel to the crystal orientation; or
moving the second laser relative to the workpiece along a direction at a first specified angle to the crystal orientation.

In a possible implementation of the first aspect, the workpiece further has a first positioning surface, the first positioning surface being perpendicular to the crystal orientation;
moving the first laser relative to the workpiece along the first path includes:
moving the first laser relative to the workpiece along a direction at a second specified angle to the first positioning surface.

In a possible implementation of the first aspect, the workpiece further has a second positioning surface, the second positioning surface being parallel to the crystal orientation;
moving the second laser relative to the workpiece along the direction at the first specified angle to the crystal orientation includes:
moving the second laser relative to the workpiece along a direction at the first specified angle to the second positioning surface.

In a possible implementation of the first aspect, the crystal orientation is [1100] crystal orientation; and the first specified angle is greater than 0° and less than or equal to 20°.

In a possible implementation of the first aspect, the first path includes a straight-line path, a concentric-circle path, or a spiral path;
the second path includes a straight-line path or a polyline path.

In a possible implementation of the first aspect, the first path is perpendicular to the second path.

In a possible implementation of the first aspect, peak power density of the second laser is outside a peak power density range capable of independently inducing nonlinear absorption in the region outside the modified traces.

In a second aspect, embodiments of the present disclosure provide a laser processing apparatus, including:
a first processing module configured to focus first laser inside a workpiece to form one or more modified traces inside the workpiece; and
a second processing module configured to irradiate the modified traces with second laser to form absorption traces, so as to enable crack generation inside the workpiece;
absorptance to the second laser in the modified traces being greater than absorptance to the second laser in a region outside the modified traces.

In a third aspect, embodiments of the present disclosure provide a device. The device is manufactured by the laser processing method according to any one of the above embodiments.

In a fourth aspect, embodiments of the present disclosure provide a device. The device has modified traces, absorption traces, and cracks;
the modified traces being formed by focusing first laser inside a workpiece;
by irradiating the modified traces with second laser to form the absorption traces, the cracks thereby being generated inside the workpiece; and
absorptance to the second laser in the modified traces being greater than absorptance to the second laser in a region outside the modified traces.

In a fifth aspect, embodiments of the present disclosure provide a processing device, including a memory, a processor, and a computer program stored in the memory and executable on the processor, when the processor executes the computer program, the laser processing method described in any one of the embodiments in the first aspect is implemented.

In a sixth aspect, embodiments of the present disclosure provide a crystalline material peeling device, including:
an irradiation unit configured to emit first laser and focus the first laser inside a crystalline material to form one or more modified traces inside the crystalline material, and configured to emit second laser to irradiate the modified traces to form absorption traces, so as to enable crack generation inside the crystalline material,
absorptance to the second laser in the modified traces being greater than absorptance to the second laser in a region outside the modified traces; and
a peeling unit configured to peel off a wafer from the crystalline material by using the cracks as a starting point.

In a seventh aspect, embodiments of the present disclosure provide a computer-readable storage medium, wherein the computer-readable storage medium has a computer program stored therein, the computer program, when executed by a processor, implementing the laser processing method described in any one of the embodiments in the first aspect.

In an eighth aspect, embodiments of the present disclosure provide a computer program product. The computer program product, when run on a terminal device, causes the terminal device to perform the laser processing method described in any one of the embodiments in the first aspect.

The embodiments of the present disclosure achieve the following beneficial effects.

The first laser is focused inside a silicon carbide crystal (i.e., the workpiece), thereby changing absorptance in the focused region, and forming one or more modified traces. The second laser irradiates the silicon carbide crystal (i.e., the workpiece). Since absorptance to the second laser in the modified traces is greater than absorptance to the second laser in a region outside the modified traces, the modified traces absorb the second laser to form absorption traces, so as to enable crack generation inside the workpiece. Due to the difference in absorptance, the processing effect of the second laser can be guided to positions of the modified traces formed with the first laser, so that the crack can essentially start to occur at the position of the corresponding modified trace. Moreover, microcracks exist near the modified traces, the microcracks can change stress distribution near a tip end of the crack generated by irradiating the current modified trace with the second laser, thereby guiding the tip end of the crack to develop towards a next modified trace. As such, when the workpiece is irradiated with the second laser, fluctuations of the cracks can also be suppressed in the early stage by the modified traces, so that a common undesirable phenomenon that fluctuations of cracks are amplified by subsequent processing inside the workpiece does not easily occur, and the lengths of the longitudinal components of the cracks can be controlled.

### BRIEF DESCRIPTION OF THE DRAWINGS

In order to illustrate the technical solutions in embodiments of the present disclosure more clearly, the accompanying drawings used in the description of the embodiments or the prior art will be briefly introduced below. It is apparent that, the accompanying drawings in the following description are only some embodiments of the present disclosure, and other drawings can be obtained by those of ordinary skill in the art from the drawings without creative efforts.
FIG. 1 is a schematic structural view of a cylindrical silicon carbide ingot according to an embodiment of the present disclosure.
FIG. 2 is a schematic structural view of a silicon carbide crystal according to an embodiment of the present disclosure.
FIG. 3 is a schematic view of cleavage of an on-axis silicon carbide crystal from one perspective according to an embodiment of the present disclosure.
FIG. 4 is a schematic view of cleavage of the on-axis silicon carbide crystal from another perspective according to an embodiment of the present disclosure.
FIG. 5 is a schematic view of cleavage of an off-axis silicon carbide crystal from one perspective according to an embodiment of the present disclosure.
FIG. 6 is a schematic view of cleavage of the off-axis silicon carbide crystal from another perspective according to an embodiment of the present disclosure.
FIG. 7 is a schematic flowchart of a laser processing method according to an embodiment of the present disclosure.
FIG. 8 is a schematic view of the processing effect of first laser on a silicon carbide crystal according to an embodiment of the present disclosure.
FIG. 9 is a schematic view of modified traces in a workpiece according to an embodiment of the present disclosure.
FIG. 10 is a schematic view of the processing effect of second laser on the silicon carbide crystal according to an embodiment of the present disclosure.
FIG. 11 is a schematic view of a workpiece after processing with the first laser and the second laser for the first time according to an embodiment of the present disclosure.
FIG. 12 is a schematic view of a workpiece after processing with the first laser and the second laser for multiple times according to an embodiment of the present disclosure.
FIG. 13 is a schematic view of cracks on a C-plane according to an embodiment of the present disclosure.
FIG. 14 is a schematic view of a laser scanning processing direction and crystal cleavage characteristics according to an embodiment of the present disclosure.
FIG. 15 is a schematic view showing the processing effect when the laser scanning processing direction is parallel or non-parallel to a crystal orientation of the silicon carbide crystal according to an embodiment of the present disclosure.
FIG. 16 is a schematic view of four irradiation regions of the second laser on the workpiece according to an embodiment of the present disclosure.
FIG. 17 is a schematic view of a first irradiation region and a second irradiation region according to an embodiment of the present disclosure.
FIG. 18 is a schematic view of the first irradiation region to a third irradiation region according to an embodiment of the present disclosure.
FIG. 19 is a schematic view of the first irradiation region to a fourth irradiation region according to an embodiment of the present disclosure.
FIG. 20 is a schematic view of distribution of modified traces according to an embodiment of the present disclosure.
FIG. 21 is a schematic view of connection between cracks on adjacent C-planes of the workpiece according to an embodiment of the present disclosure.
FIG. 22 is a schematic view of the processing effect of the first laser on the silicon carbide crystal along a first processing path according to an embodiment of the present disclosure.
FIG. 23 is a schematic view of the processing effect of the first laser on the silicon carbide crystal along the first processing path according to another embodiment of the present disclosure.
FIG. 24 is a schematic view of the processing effect of the first laser on the silicon carbide crystal along the first processing path according to yet another embodiment of the present disclosure.
FIG. 25 is a schematic view of the processing effect of the first laser on the silicon carbide crystal along the first processing path according to yet another embodiment of the present disclosure.
FIG. 26 is a schematic view of distribution of modified traces in a Y-axis direction profile according to a set spacing.
FIG. 27 is a schematic view of a profile of modified traces in an X-axis direction.
FIG. 28 is a schematic view of the processing effect of the second laser on the silicon carbide crystal along a second processing path according to an embodiment of the present disclosure.
FIG. 29 is a schematic view of modified traces according to another embodiment of the present disclosure.
FIG. 30 is a schematic structural view of a laser processing apparatus according to an embodiment of the present disclosure.
FIG. 31 is a schematic structural view of a processing device according to an embodiment of the present disclosure.
FIG. 32 is a schematic structural view of a crystalline material peeling device according to an embodiment of the present disclosure.

### DETAILED DESCRIPTION

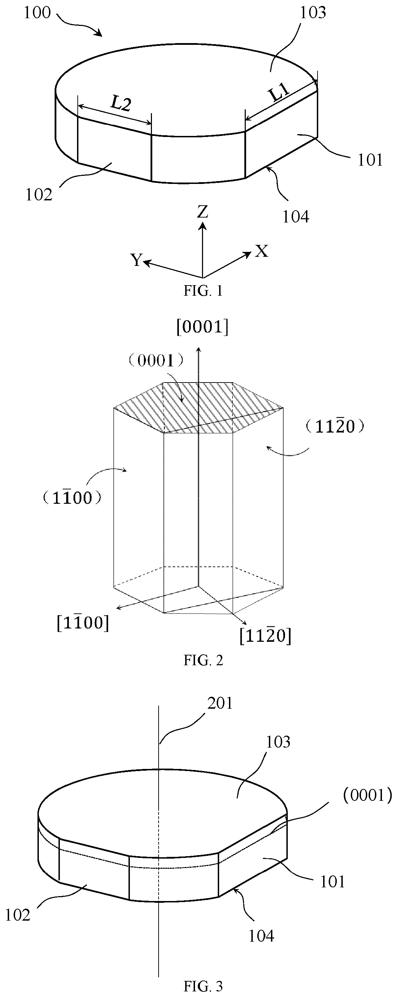

In order to make the technical problems to be solved by the present disclosure, technical solutions, and beneficial effects more comprehensible, the present disclosure is further described in detail below with reference to FIG. 1 to FIG. 32 and embodiments. It should be understood that specific embodiments described herein are only used to explain the present disclosure and are not used to limit the present disclosure.

In the following description, for the purpose of explanation rather than limitation, specific details such as particular system structures and technologies are set forth in order to provide a thorough understanding of the embodiments of the present disclosure. However, it will be apparent to those skilled in the art that the present disclosure can be implemented in other embodiments without these specific details. In other cases, detailed descriptions of well-known systems, apparatuses, circuits, and methods are omitted so as not to obscure the description of the present disclosure with unnecessary detail.

It should be understood that the term "include/comprise" used in the specification of the present disclosure and the appended claims indicates the presence of the features, integers, steps, operations, elements and/or components, but cannot exclude the presence or addition of one or more of other features, integers, steps, operations, elements, components and/or combinations thereof.

It should be further understood that the term "and/or" used in the specification of the present disclosure and the appended claims refers to any or all possible combinations of one or more of the associated listed items, and includes such combinations.

As used in the specification of the present disclosure and the appended claims, the term "if" can be interpreted as "when", or "once", or "in response to a determination", or "in response to detection of' depending on the context. Similarly, depending on the context, the phrase "if it is determined that" or "if [a described condition or event] is detected" can be interpreted as "once it is determined that", or "in response to a determination", or "once [a described condition or event] is detected", or "in response to a case where [a described condition or event] is detected".

In addition, in the description of the specification of the present disclosure and the appended claims, the terms "first", "second", "third", and the like are only used for distinguishing descriptions and should not be understood as indicating or implying relative importance.

In the description of the specification of the present disclosure, reference terms such as "an embodiment" and "some embodiments" mean that a particular feature, structure, or characteristic described in connection with the embodiment(s) is included in one or more embodiments of the present disclosure. Therefore, the phrases such as "in an embodiment", "in some embodiments", "in some other embodiments", and "in yet other embodiments" appearing in various places in the specification do not necessarily all refer to the same embodiment, but rather mean "one or more but not all embodiments", unless specifically emphasized otherwise. The terms "include", "comprise", "have" and variations thereof mean "including, but being not limited to", unless specifically emphasized otherwise.

Embodiments of the present disclosure provide a laser processing method, which can be used to peel a workpiece (i.e., a method for peeling a workpiece using a laser) or to thin a workpiece (i.e., a method for thinning a workpiece using a laser). The workpiece can be a crystalline material. The crystalline material can be a silicon carbide material, for example, such as a columnar silicon carbide ingot or a thin silicon carbide wafer.

FIG. 1 is a schematic structural view of a cylindrical silicon carbide ingot according to an embodiment of the present disclosure. Referring to FIG. 1, the embodiment of the present disclosure is described by taking a cylindrical silicon carbide ingot as an example. The cylindrical silicon carbide ingot 100 has a first surface 103 and a second surface 104 parallel to each other. In a height direction (i.e., a thickness direction) of the cylindrical silicon carbide ingot, the first surface 103 is an upper surface, and the second surface 104 is a lower surface. The first surface 103 can be a polished flat surface. The crystalline material such as a cylindrical silicon carbide ingot is processed to include a first positioning surface 101 and a second positioning surface 102. The first positioning surface 101 and the second positioning surface 102 are configured to determine a crystal orientation of the crystalline material. A length of the first positioning surface 101 is L1, and a length of the second positioning surface is L2, where L1>L2. The first positioning surface 101 of the crystalline material is parallel to the X-axis direction, the second positioning surface 102 is parallel to the Y-axis direction, and the height direction of the crystalline material is parallel to the Z-axis direction.

FIG. 2 is a schematic structural view of a silicon carbide crystal according to an embodiment of the present disclosure. Referring to FIG. 2, the silicon carbide crystal is a typical polytype with hundreds of crystal structures, one of which is a 4H-SiC crystal. A commercial substrate material is mainly the 4H-SiC crystal, and thus the 4H-SiC crystal is used herein as an example for description. The laser processing method provided in the embodiments of the present disclosure is also applicable to other silicon carbide crystals such as 6H-SiC.

Referring to FIG. 2, the 4H-SiC crystal has a hexagonal crystal structure, which includes three main cleavage planes: (0001) crystal plane (also called C-plane), (1100) crystal plane, and (1120) crystal plane; and crystal orientations perpendicular to the corresponding crystal planes: [0001] crystal orientation (also called C-axis), [1100] crystal orientation, and [1120] crystal orientation. Among the three main cleavage planes, the C-plane (0001) has minimum fracture toughness. Therefore, when the silicon carbide crystal is subjected to an external force and cracks are generated, the cracks easily propagate along the C-plane (0001).

According to geometric structures of the crystalline material, silicon carbide crystals are divided into on-axis silicon carbide crystals and off-axis silicon carbide crystals.

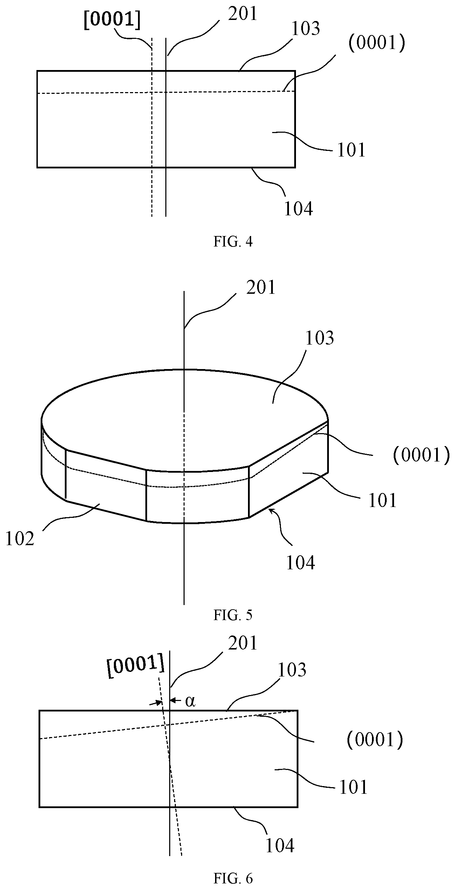

FIG. 3 is a schematic view of cleavage of an on-axis silicon carbide crystal from one perspective according to an embodiment of the present disclosure. FIG. 4 is a schematic view of cleavage of the on-axis silicon carbide crystal from another perspective according to an embodiment of the present disclosure. Referring to FIG. 3 and FIG. 4, the first surface 103 of the on-axis silicon carbide crystal is parallel to the C-plane of the silicon carbide crystal. In addition, the crystal orientation [1120] is parallel to the first positioning surface 101 of the silicon carbide crystal, and the [1100] crystal orientation is parallel to the second positioning surface 102 of the silicon carbide crystal. An axis 201 represents an imaginary straight line perpendicular to the first surface 103 of the crystal. For the on-axis silicon carbide crystal, the axis 201 is parallel to the C-axis 210 of the crystal. When a cleavage crack is generated inside the on-axis silicon carbide crystal, the crack propagates along the C-plane (0001), and eventually a peeling surface formed by the propagation of the crack is parallel to the first surface 103.

FIG. 5 is a schematic view of cleavage of an off-axis silicon carbide crystal from one perspective according to an embodiment of the present disclosure. FIG. 6 is a schematic view of cleavage of the off-axis silicon carbide crystal from another perspective according to an embodiment of the present disclosure. Referring to FIG. 5 and FIG. 6, the first surface 103 of the off-axis silicon carbide crystal is not parallel to the C-plane (0001), and the first surface 103 is at a small angle α to the C-plane (0001), where α is generally 4°. The first surface 103 of another off-axis crystalline material (such as gallium nitride) is not parallel to the C-plane (0001) either. There are many C-planes inside the silicon carbide crystal, and the C-planes are parallel to each other. An axis 201 represents an imaginary straight line perpendicular to the first surface 103 of the crystal. Referring to FIG. 6, for the off-axis silicon carbide crystal, the axis 201 is at an inclination angle α of 4° to the C-axis. When a cleavage crack is generated inside the off-axis silicon carbide crystal, the crack propagates along the C-plane (0001), and eventually a peeling surface formed by the propagation of the crack can be at an inclination angle α of 4° to the first surface 103. When a crack is generated in silicon carbide under the action of laser, the crack can fluctuate up and down along the C-plane, and it is difficult to control the length of the component of the crack in the longitudinal direction (i.e., the thickness direction or the height direction) of the silicon carbide ingot.

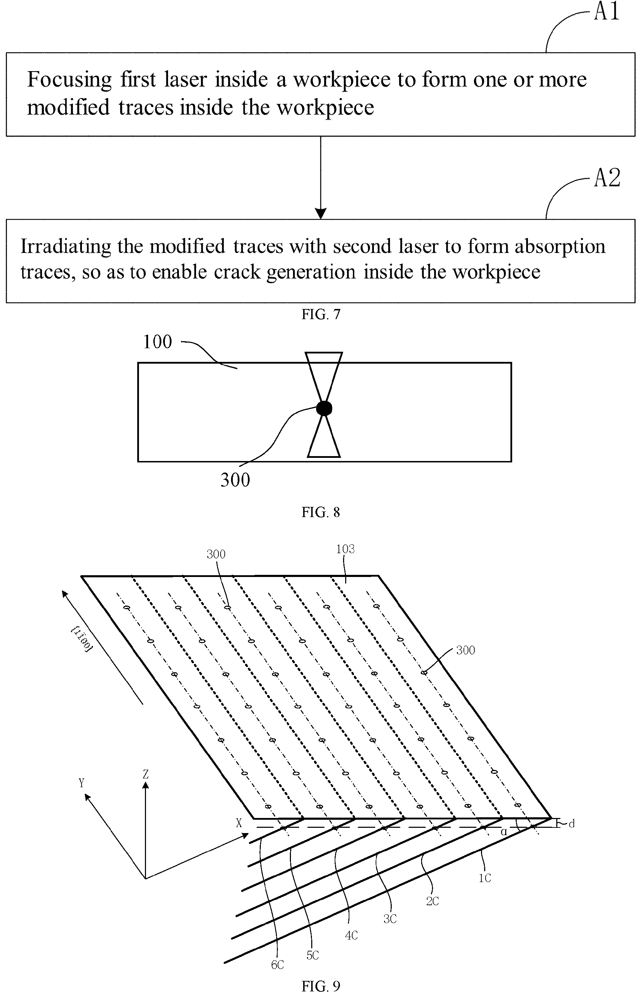

FIG. 7 is a schematic flowchart of a laser processing method according to an embodiment of the present disclosure. Referring to FIG. 7, in order to solve the above technical problem, the laser processing method provided in the embodiment of the present disclosure includes step A1 and step A2.

In step A1, first laser is focused inside a workpiece to form one or more modified traces inside the workpiece.

FIG. 8 is a schematic view of the processing effect of first laser on silicon carbide crystal according to an embodiment of the present disclosure. FIG. 9 is a schematic view of modified traces of a workpiece according to an embodiment of the present disclosure. Referring to FIG. 8 and FIG. 9, the first laser has a wavelength that is relatively transparent to the silicon carbide crystal (i.e., the workpiece). The first laser is focused inside the workpiece. For example, the first laser moves relative to the silicon carbide crystal and is focused inside the silicon carbide crystal, forming a modified trace 300 inside the silicon carbide crystal. One or more modified traces 300 can be formed. The depth of focus is equal to the thickness of the wafer required to be peeled from the silicon carbide crystal.

The first laser is focused on the silicon carbide crystal to achieve modification, and the modified trace 300 is formed inside the workpiece. For example, the first laser is focused on the silicon carbide crystal to transform monocrystalline silicon carbide crystal into polycrystalline silicon carbide crystal. Certainly, when the first laser is focused on the silicon carbide crystal, gasification or sublimation phenomena can occur. Therefore, the modified trace includes the polycrystalline silicon carbide crystal. The modified trace 300 can be in the form of dot or line, such as dots spaced apart along the direction in which the first laser moves, or a continuous line (such as a straight line, a circular line, or a spiral line) along the direction in which the first laser moves.

Along with the formation of the modified trace 300, microcracks exist near the modified trace 300. The microcracks are tiny cracks that are invisible to a naked eye.

It should be understood that by setting parameters of the first laser, such as a power, a pulse width, a spot size, a central wavelength, a repetition frequency, etc., the silicon carbide crystal can be modified when the first laser is focused on the silicon carbide crystal. For example, pulsed laser with a first pulse width moves relative to the silicon carbide crystal (i.e., the workpiece) and is focused inside the silicon carbide crystal (i.e., the workpiece) to cause the silicon carbide crystal to be modified.

In practical applications, the first laser can be emitted by a laser processing head. The laser processing head moves relative to the silicon carbide crystal (i.e., the workpiece), and the laser processing head emits the first laser. For example, the laser processing head moves relative to the silicon carbide crystal (i.e., the workpiece) and simultaneously emits the first laser to process the silicon carbide crystal (i.e., the workpiece). Alternatively, after moving to a processing position relative to the silicon carbide crystal (i.e., the workpiece), the laser processing head emits the first laser to process the silicon carbide crystal (i.e., the workpiece), then stops emitting the first laser, continuously moves to a next processing position relative to the silicon carbide crystal (i.e., the workpiece), and then emits the first laser again to process the silicon carbide crystal (i.e., the workpiece). This process is repeated so that one or more modified traces 300 can be formed inside the workpiece.

When the step A1 is implemented, the first laser can perform processing at the same position once or multiple times.

In step A2, the modified traces are irradiated with second laser to form absorption traces, so as to enable crack generation inside the workpiece.

Absorptance to the second laser in the modified traces 300 is greater than absorptance to the second laser in a region outside the modified traces. The region outside the modified trace refers to a region of the workpiece not processed (i.e., irradiated) with the first laser. For the silicon carbide crystal, the region outside the modified trace is essentially monocrystalline silicon carbide crystal. As described above, the modified trace 300 includes polycrystalline silicon carbide crystals. Absorptance of the polycrystalline silicon carbide crystal to the second laser is greater than absorptance of the monocrystalline silicon carbide crystal to the second laser.

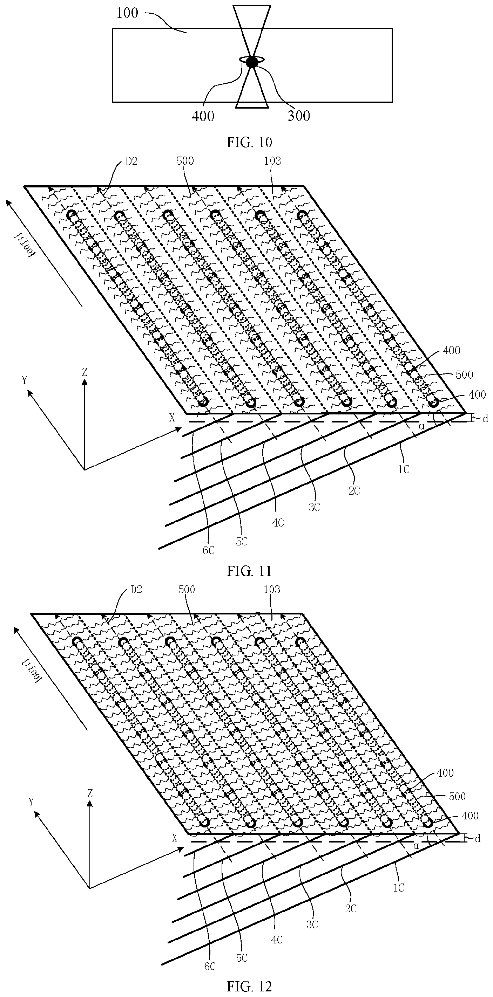

FIG. 10 is a schematic view of the processing effect of the second laser on the silicon carbide crystal according to an embodiment of the present disclosure. FIG. 11 is a schematic view of the workpiece after processing with the first laser and the second laser for the first time according to an embodiment of the present disclosure. FIG. 12 is a schematic view of the workpiece after processing with the first laser and the second laser for multiple times according to an embodiment of the present disclosure. Referring to FIG. 10 to FIG. 12, the second laser also has a wavelength that is relatively transparent to the silicon carbide crystal (i.e., the workpiece), and can be focused on the modified trace 300 generated by the first laser in the silicon carbide crystal (i.e., the workpiece), thereby irradiating the modified trace 300. A depth of focus of the second laser is substantially the same as a depth of focus of the first laser and is equal to the thickness of the wafer required to be peeled from the silicon carbide crystal, in which errors may exist in actual processing.

It should be understood that the first laser and the second laser can be emitted by a same laser processing head; alternatively, the first laser can be emitted by one laser processing head and the second laser can be emitted by another laser processing head. The first laser and the second laser can be generated by the same laser device or by different laser devices.

The first laser and the second laser are different. Specifically, parameters of the first laser (such as power, a pulse width, a spot size, a central wavelength, a repetition frequency, etc.) are different from those of the second laser (such as power, a pulse width, a spot size, a central wavelength, a repetition frequency, etc.), so that absorptance to the second laser in the modified trace is greater than absorptance to the second laser in the region outside the modified trace. It should be understood that the parameters of the first laser and the parameters of the second laser can be partially different or wholly different.

For example, the first laser is pulsed laser with a first pulse width, the second laser is pulsed laser with a second pulse width, and the second pulse width is greater than the first pulse width. The second laser with the second pulse width irradiates the modified traces. For example, the second laser moves relative to the silicon carbide crystal (i.e., the workpiece) and irradiates each of the modified traces. Due to the difference in absorption, the processing effect of the second laser can be guided to positions of the modified traces formed with the first laser. Each modified trace 300 absorbs the second laser, and an absorption trace 400 is formed at the position of each modified trace 300 (for example, at an upper part or a middle part of the modified trace in the height direction), so that one or more absorption traces 400 can be formed inside the workpiece.

The absorption trace 400 is a modified trace newly formed in the workpiece after the modified trace 300 absorbs the second laser. The absorption trace 400 includes polycrystalline silicon carbide crystal. When second laser with higher power is used to irradiate the modified trace 300 to improve efficiency, the obtained absorption trace 400 is a modified trace with a larger size, which is specifically a modified trace with a larger transverse dimension. Alternatively, a transverse range of the absorption trace is greater than a transverse range of the modified trace. For example, along a transverse direction of the workpiece (such as the X-axis direction or the Y-axis direction), a transverse dimension (such as a diameter) of the absorption trace is greater than a transverse dimension of the modified trace. The transverse direction of the workpiece is perpendicular to the thickness direction of the workpiece. Along the thickness direction of the workpiece (such as the Z-axis direction), a longitudinal dimension of the absorption trace can be less than, greater than or substantially equal to that of the modified trace, which can be implemented by controlling the parameters of the second laser (such as power) according to an actual requirement.

Referring to FIG. 11 and FIG. 12, along with the appearance of the absorption traces 400, cracks 500 can occur inside the silicon carbide crystal (i.e., the workpiece). Even if no crack is generated when the modified traces are irradiated with the second laser for the first time, when the absorption traces are irradiated with the second laser again to peel the workpiece or thin the workpiece, cracks 500 can occur inside the silicon carbide crystal (i.e., the workpiece). Each crack 500 essentially starts to occur at the position of the corresponding modified trace 300 (e.g., occurring around the absorption trace 400), with good consistency. The cracks 500 are generated along the C-plane.

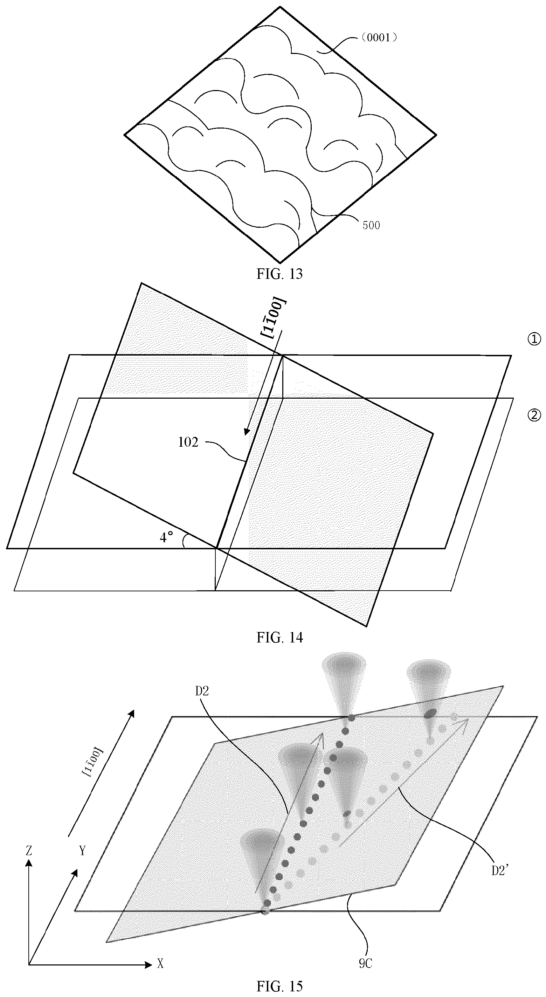

FIG. 13 is a schematic view of cracks on the C-plane according to an embodiment of the present disclosure. Referring to FIG. 13, it should be understood that for silicon carbide, the cracks 500 can fluctuate up and down (somewhat like sea waves) with the C-plane as a center, and the cracks 500 can also be in various directions. For example, with the modified traces 300 as centers, the cracks are distributed around the centers.

As described above, microcracks exist near the modified trace 300. When a plurality of modified traces 300 are formed, and when the current modified traces are irradiated with the second laser to form absorption traces and generate cracks inside the workpiece, the microcrack can change stress distribution near a tip end of the crack, thereby guiding the tip end of the crack near the current modified trace to develop towards a next modified trace (i.e., a modified trace near the current modified trace).

According to the above content, the first laser is focused inside the silicon carbide crystal (i.e., the workpiece) to change absorptance of a focus region and form the modified trace 300. When the second laser irradiates the silicon carbide crystal (i.e., the workpiece), since absorptance to the second laser in the modified trace 300 is greater than absorptance to the second laser in the region outside the modified trace, the modified trace 300 absorbs the second laser to form the absorption trace 400, which in turn causes the crack 500 to be generated inside the workpiece. Due to the difference in the absorptance, the processing effect of the second laser can be guided to positions of the modified traces 300 formed with the first laser, so that the cracks 500 can be essentially generated at the positions of the corresponding modified traces 300. Moreover, microcrack exists near the modified trace 300, and the microcrack can change stress distribution near the tip end of the crack 500 generated by irradiation of the current modified trace with the second laser, thereby guiding the tip end of the crack 500 to develop towards the next modified trace 300. As such, when the workpiece is irradiated with the second laser, fluctuation of the crack can be suppressed in the early stage by the modified trace, so that a common undesirable phenomenon that the fluctuation of the crack is amplified by the subsequent processing does not easily occur inside the workpiece, and the length of the longitudinal component of the crack can be controlled.

In some embodiments, peak power density of the second laser is outside a peak power density range capable of independently inducing nonlinear absorption in the region outside the modified trace.

Specifically, the second laser can be absorbed by the modified traces 300, but it essentially cannot be absorbed by the region outside the modified traces. The region outside the modified traces refers to a region of the workpiece not processed (i.e., irradiated) with the first laser. For the silicon carbide crystal, the region outside the modified traces is essentially monocrystalline silicon carbide crystal.

The first laser is focused inside the silicon carbide crystal (i.e., the workpiece) to form a modified trace inside the workpiece. When the second laser irradiates the modified trace to generate a crack inside the workpiece, since the peak power density of the second laser is outside the peak power density range capable of independently inducing nonlinear absorption in the region outside the modified trace, even if a depth of focus of the second laser fluctuates or a focal point thereof swings and irradiates the region outside the modified trace, the region outside the modified trace essentially does not absorb the second laser, which can prevent defects due to absorption of the second laser by the region outside the modified trace, thereby improving processing quality.

FIG. 14 is a schematic view of a laser scanning processing direction and crystal cleavage characteristics according to an embodiment of the present disclosure. Referring to FIG. 14, specifically, taking the conductive silicon carbide crystal as an example, the influence of the laser scanning processing direction (i.e., a direction in which the laser moves relative to the workpiece) on the processing effect is discussed. For the conductive silicon carbide crystal, the cleavage plane thereof (i.e., C-plane) is inclined at 4° to an upper surface ① (parallel to the first surface 103) of the crystal and a lower surface ② (parallel to the first surface 103) of the crystal. The direction of the intersection line between the cleavage plane and the upper surface ① is parallel to the [1100] crystal orientation of the crystal.

FIG. 15 is a schematic view of the processing effect when the laser scanning processing direction is parallel or non-parallel to the crystal orientation of the silicon carbide crystal according to an embodiment of the present disclosure. Referring to FIG. 15, when laser is used to scan and process the crystalline material, if a laser scanning processing direction D2 is parallel to the [1100] crystal orientation of the crystalline material, a crack surface 9C (i.e., the C-plane with cracks fluctuating up and down) generated in the crystalline material due to the laser scanning is parallel to the laser scanning processing direction D2. Along the laser scanning processing direction D2, the length of the longitudinal component of the crack changes relatively little.

Referring to FIG. 15, if a laser scanning processing direction D2' is not parallel to the [1100] crystal orientation of the crystalline material, the crack surface 9C (i.e., the C-plane with cracks fluctuating up and down) generated in the crystalline material due to the laser scanning is not parallel to the laser scanning processing direction D2'. Subsequent laser will irradiate the crack surface 9C generated along the laser scanning processing direction D2' but inclined relative to the scanning processing direction D2', thereby causing the crack surface 9C to extend to a higher position. As a result, the length of the longitudinal component of the crack can gradually increase along the laser scanning processing direction, leading to a large fluctuation of the peeling surface, and resulting in an increase in the roughness of the peeling surface, thereby causing an increase in an external force required for peeling. Meanwhile, more materials are required to be ground off during subsequent grinding and polishing.

In order to prevent excessive fluctuation of the length of the longitudinal component of the crack along the laser scanning processing direction, one solution is to make the laser scanning processing direction completely coincide with the [1100] crystal orientation of the crystal. However, in the solution, in order to confirm the [1100] crystal orientation, an additional crystal orientation device is required, and extremely high requirements are placed on movement accuracy of a processing platform, which makes implementation very difficult.

According to the laser processing method provided in the embodiments of the present disclosure, microcracks exist near the modified trace 300, and the microcrack can change stress distribution near the tip end of the crack 500 generated by irradiating the current modified trace with the second laser. Even if the scanning processing direction D2 of the second laser has a deviation angle (such as a first specified angle) with the [1100] crystal orientation of the silicon carbide crystal, the microcrack can guide the tip end of the crack 500 to develop towards the next modified trace 300, and the length of the longitudinal component of the crack 500 can be controlled. Allowing the scanning processing direction D2 of the second laser to have the deviation angle (such as the first specified angle) with the [1100] crystal orientation of the silicon carbide crystal can reduce the requirement for the crystal orientation capability during the processing, thereby reducing the difficulty of implementation. A piece of material can be peeled from the workpiece with less force later, which can reduce a material removal amount of the crystalline material (such as a silicon carbide crystalline material) during the grinding and polishing, thereby being applicable to an off-axis grown crystalline material (or referred to as an off-axis crystalline material) and reducing requirements for the crystal orientation and crystal uniformity of the crystalline material.

In conclusion, according to the laser processing method provided in the embodiments of the present disclosure, the second laser can move relative to the workpiece (e.g., the off-axis crystalline material) along the direction D2 at the first specified angle with the [1100] crystal orientation, and the second laser irradiates the modified trace 300. The first specified angle is greater than 0°. Certainly, according to an actual situation, the second laser can alternatively move relative to the crystalline material in a direction at the first specified angle with another crystal orientation (such as the [1120] crystal orientation) and irradiate the modified trace 300.

According to practical results, the first specified angle is greater than 0° and less than or equal to 20°, so that the length of the longitudinal component of the crack is relatively small. When the first specified angle is greater than 20°, the modified trace generated by the first laser inside the silicon carbide crystal can have a relatively reduced guiding effect on the second laser, and the limitation on the length of the longitudinal component of the crack can also be relatively reduced.

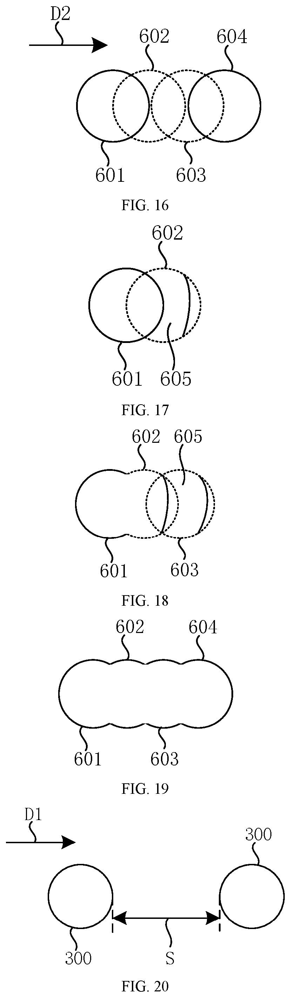

FIG. 16 is a schematic view of four irradiation regions of the second laser on the workpiece according to an embodiment of the present disclosure. FIG. 17 is a schematic view of a first irradiation region and a second irradiation region according to an embodiment of the present disclosure. FIG. 18 is a schematic view of the first irradiation region to a third irradiation region according to an embodiment of the present disclosure. FIG. 19 is a schematic view of the first irradiation region to a fourth irradiation region according to an embodiment of the present disclosure. Referring to FIG. 16 to FIG. 19, in some embodiments, along a direction D2 in which the second laser moves relative to the workpiece, two adjacent regions irradiated with a focal point of the second laser have an overlapping part, so that cracks can be generated in a region between two absorption traces.

The overlapping part between the two adjacent regions irradiated with the focal point of the second laser is referred to as an overlapping region. Due to the existence of the overlapping region, new absorption traces can be formed along the direction D2 in which the second laser moves, and such newly formed absorption traces are called diffusion traces.

For example, a region irradiated with the focal point of the second laser is referred to as an irradiation region. Since the position of a focal point of a laser can have an error in practice, the irradiation region can be a region irradiated with light within a focal depth of the second laser. Referring to FIG. 16 to FIG. 19, taking four irradiation regions as an example, a first irradiation region 601 is an absorption trace; a second irradiation region 602 overlaps with the first irradiation region 601, and starting from the overlapping region, a diffusion trace 605 with a certain area can be formed in a non-overlapping region of the second irradiation region 602, where a size of the area of the diffusion trace can be determined by setting the parameters of the second laser. Referring to FIG. 18, a third irradiation region 603 and the second irradiation region 602 have an overlapping region, and starting from the overlapping region, a diffusion trace 605 with a certain area can be formed in a non-overlapping region of the third irradiation region 603. Referring to FIG. 19, a fourth irradiation region 604 is an absorption trace, in which after the second laser irradiates the modified trace, a larger modified trace (i.e., the absorption trace) can be formed roughly centered on the modified trace. The absorption trace can overlap with the diffusion trace 605 of the third irradiation region 603. As such, along the direction D2 in which the second laser moves, a continuous absorption trace can be formed inside the workpiece, so that cracks can be formed in the workpiece along the direction in which the second laser moves.

In order to form the overlapping part between two adjacent regions irradiated with the focal point of the second laser, the second laser can specifically be pulsed laser, or the overlapping part between two adjacent irradiated regions can be achieved by turning on or off laser emission.

Referring to FIG. 16, in some embodiments, along the direction D2 in which the second laser moves relative to the workpiece, at least one region irradiated with the focal point of the second laser exists between two absorption traces. That is, the two absorption traces 400 are separated by at least one irradiation region.

During the formation of the absorption trace 400 by irradiating the modified trace 300 with the second laser, relatively large energy absorption can occur. By separating the two absorption traces 400 by at least one irradiation region, a phenomenon of ablation or gasification can be reduced, so that damage to the inside of the workpiece can be reduced, and the processing quality can be improved.

FIG. 20 is a schematic view of distribution of modified traces according to an embodiment of the present disclosure. Referring to FIG. 20, in some embodiments, along the direction D1 in which the first laser moves relative to the workpiece, a gap S between two adjacent modified traces 300 is smaller than a spot size of the focal point of the second laser, which can improve the probability of irradiation of the modified trace 300 by the second laser.

Referring to FIG. 12, in some embodiments, the first laser moves relative to the workpiece along a first path and is focused inside the workpiece to form modified traces inside the workpiece. The second laser moves relative to the workpiece along the first path and the second laser irradiates the modified traces to form absorption traces, so as to enable crack generation inside the workpiece.

The first laser and the second laser move relative to the workpiece along the same path (i.e., the first path) and irradiate the workpiece, which can simplify parameter settings of the device and improve efficiency.

Referring to FIG. 12, in some embodiments, the second laser moves relative to the workpiece along a specified direction (such as the Y-axis direction, or the [1100] crystal orientation) and the second laser irradiates a part of the modified traces to form absorption traces; and the second laser changes rows and moves relative to the workpiece along a direction parallel to the specified direction, and the second laser irradiates another part of the modified traces to form absorption traces, so as to enable crack generation inside the workpiece.

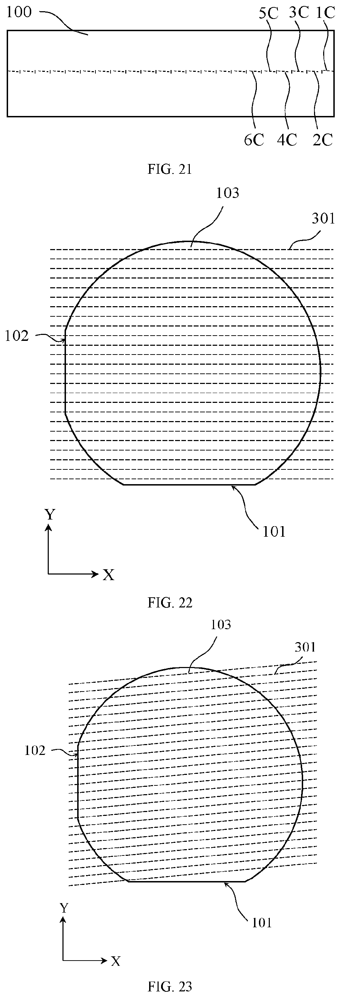

Specifically, the second laser processes the workpiece in a line-by-line scanning manner, and irradiates the modified traces at different positions. FIG. 21 is a schematic view of connection between cracks on adjacent C-planes of the workpiece according to an embodiment of the present disclosure. Referring to FIG. 12 and FIG. 21, the position d of the focal point of the second laser is essentially unchanged, the irradiation region in each row corresponds to a C-plane, and the C-planes corresponding to the irradiation regions in two adjacent rows are essentially parallel to each other and have a height difference in the height direction of the workpiece. The second laser processes the workpiece in a line-by-line scanning manner. As the crack extends along the C-plane, the cracks on adjacent C-planes can be connected. For example, referring to FIG. 12 and FIG. 21, a crack on a C-plane 1C is connected to a crack on a C-plane 2C, the crack on the C-plane 2C is connected to a crack on a C-plane 3C, the crack on the C-plane 3C is connected to a crack on a C-plane 4C, the crack on the C-plane 4C is connected to a crack on a C-plane 5C, and the crack on the C-plane 5C is connected to a crack on a C-plane 6C, forming a peeling surface. As such, it allows the workpiece to be peeled or the thickness of the workpiece to be reduced.

After the longitudinal dimension of the crack is controlled, a total thickness variation (TTV) of the wafer peeled from the silicon carbide crystal (also called a peeled layer) can be reduced. After the TTV of the peeled layer is reduced, the external force required for peeling can also be reduced, and less material is required to be removed when the rough surface after peeling is ground to a flat surface.

In some embodiments, peak power density of the second laser is within a peak power density range capable of independently inducing nonlinear absorption in the region outside the modified trace.

Since absorptance to the second laser in the modified trace is greater than absorptance to the second laser in the region outside the modified trace, although the modified trace and the region outside the modified trace can both nonlinearly absorb the second laser, the second laser can be absorbed by the modified trace first, which can prevent damage to the region outside the modified trace due to absorption of the second laser to some extent, and can protect the workpiece.

In some embodiments, the second laser irradiates the modified traces multiple times in an intermittent manner, so as to enable crack generation inside the workpiece.

As described above, the absorption traces can be formed by irradiating the modified traces with the second laser. Along with the appearance of the absorption traces, cracks can occur inside the silicon carbide crystal (i.e., the workpiece). The second laser irradiates the modified traces multiple times in the intermittent manner, the cracks around a same modified trace can grow by a certain length with each irradiation by the second laser, which enables the cracks to gradually grow to a specified length, and can prevent the cracks from growing violently and exceeding the specified length due to absorption of excessive energy by the modified trace at one time, thereby better controlling the longitudinal dimension of the crack and improving processing accuracy.

The second laser irradiates the modified traces multiple times in an intermittent manner, so as to enable crack generation inside the workpiece, which is implemented by: multiple laser pulses of the second laser successively irradiate the modified traces, so as to enable crack generation inside the workpiece.

Specifically, the second laser can be pulsed laser. Multiple laser pulses can irradiate the modified trace at a certain interval, so that the crack can gradually grow to a specified length.

As described above, the cracks can occur inside the silicon carbide crystal (i.e., the workpiece) by irradiating the modified traces with the second laser. Since the second laser can be absorbed by the modified trace 300 but essentially cannot be absorbed by the region outside the modified trace, the second laser irradiates the modified trace multiple times in an intermittent manner. Referring to FIG. 11 and FIG. 12, the cracks around a same modified trace can grow by a certain length with each irradiation by the second laser, which enables the cracks to gradually grow to a specified length, and can prevent the cracks from growing violently and exceeding the specified length due to absorption of excessive energy by the modified trace at one time, thereby better controlling the longitudinal dimension of the crack and improving processing accuracy.

The second laser irradiates the modified traces multiple times in an intermittent manner to form the absorption traces, so as to enable crack generation inside the workpiece, which is alternatively implemented by: moving the second laser multiple times relative to the workpiece along a same path, and irradiating the modified traces with the second laser to form the absorption traces, so as to enable crack generation inside the workpiece.

Specifically, after completing irradiation of the modified trace along the specified path for the first time, the second laser goes back to irradiate the modified trace for the N^{th} time (where N is an integer greater than 1) along the specified path again, so that the crack can gradually grow to the specified length.

According to the laser processing method provided in the embodiments of the present disclosure, the longitudinal dimension of the crack can be controlled, fluctuations (represented by a total thickness variation, TTV) of the peeling surface caused by off-axis growth of the crystalline material (such as the silicon carbide crystalline material) can be effectively reduced, and a smoother peeling surface can be obtained. The smooth peeling surface can be peeled with less force. Meanwhile, the smoother peeling surface results in a smaller laser damage layer, which can reduce the material removal amount of the crystalline material (such as the silicon carbide crystalline material) during the grinding and polishing. Requirements for the crystal orientation and crystal uniformity of the crystalline material (such as the silicon carbide crystalline material) are relatively low, which is more conducive to implementation during industrialization, and can improve production efficiency and reduce costs, thereby being suitable to slicing silicon carbide ingots and thinning silicon carbide devices.

According to the laser processing method provided in the embodiments of the present disclosure, the generation of cracks in the region outside the modified trace due to absorption of the second layer can also be prevented, and the processing quality can be improved.

Referring to FIG. 5 and FIG. 6, the first surface 103 of the off-axis silicon carbide crystal is not parallel to the C-plane (0001), and the first surface 103 is at a small angle α to the C-plane (0001), where α is generally 4°. The first surface 103 of another off-axis crystalline material (such as gallium nitride) is not parallel to the C-plane (0001) either. An axis 201 represents an imaginary straight line perpendicular to the first surface 103 of the crystal. Referring to FIG. 6, for the off-axis silicon carbide crystal, the axis 201 is at an inclination angle α of 4° to the C-axis. When a cleavage crack is generated inside the off-axis silicon carbide crystal, the crack propagates along the C-plane (0001), and eventually a peeling surface formed by the propagation of the crack can be at an inclination angle α of 4° to the first surface 103. However, the generation of the cracks has certain randomness, and crack misalignment can occur, making it difficult to connect the cracks on adjacent C-planes.

How the above laser processing method solves the above technical problem is specifically described.

Step A1 of focusing first laser inside a workpiece to form one or more modified traces inside the workpiece can specifically include: moving the first laser relative to the workpiece along a first path and focusing the first laser inside the workpiece to form the modified traces inside the workpiece.

FIG. 22 is a schematic view of the processing effect of the first laser on the silicon carbide crystal along a first processing path according to an embodiment of the present disclosure. Referring to FIG. 9, FIG. 10, and FIG. 22, the first laser has a wavelength that is relatively transparent to the silicon carbide crystal (i.e., the workpiece). The first laser moves relative to the silicon carbide crystal along a first path 301 and is focused inside the silicon carbide crystal, forming a modified trace 300 inside the silicon carbide crystal. One or more modified traces 300 can be formed. A depth of focus is equal to the thickness of a wafer required to be peeled from the silicon carbide crystal.

The first laser is focused on the silicon carbide crystal to achieve modification, and the modified trace 300 is formed inside the workpiece. For example, the first laser is focused on the silicon carbide crystal so that monocrystalline silicon carbide crystal becomes polycrystalline silicon carbide crystal. Certainly, when the first laser is focused on the silicon carbide crystal, gasification or sublimation can occur. Therefore, the modified trace includes the polycrystalline silicon carbide crystal. The modified trace 300 can be in the form of a dot or a line, such as dots spaced apart along a direction in which the first laser moves, or a continuous line (such as a straight line, a circular line, or a spiral line) along the direction in which the first laser moves.

Along with the formation of the modified trace 300, microcracks exist near the modified trace 300. The microcracks are tiny cracks that are invisible to a naked eye.

It should be understood that, by setting parameters of the first laser, such as power, pulse width, a spot size, a central wavelength, a repetition frequency, etc., the silicon carbide crystal can be modified when the first laser is focused on the silicon carbide crystal. For example, pulsed laser with a first pulse width moves relative to the silicon carbide crystal (i.e., the workpiece) and is focused inside the silicon carbide crystal (i.e., the workpiece), so that the silicon carbide crystal is modified.

In practical applications, the first laser can be emitted by a laser processing head. The laser processing head moves relative to the silicon carbide crystal (i.e., the workpiece) along the first path 301, and the laser processing head emits the first laser. For example, the laser processing head moves relative to the silicon carbide crystal (i.e., the workpiece) along the first path 301 and simultaneously emits the first laser to process the silicon carbide crystal (i.e., the workpiece). Alternatively, after moving to a processing position relative to the silicon carbide crystal (i.e., the workpiece) along the first path 301, the laser processing head emits the first laser to process the silicon carbide crystal (i.e., the workpiece), then stops emitting the first laser, continues to move to a next processing position relative to the silicon carbide crystal (i.e., the workpiece) along the first path, and then emits the first laser again to process the silicon carbide crystal (i.e., the workpiece). This process is repeated so that the first laser moves relative to the silicon carbide crystal (i.e., the workpiece) along the first path 301.

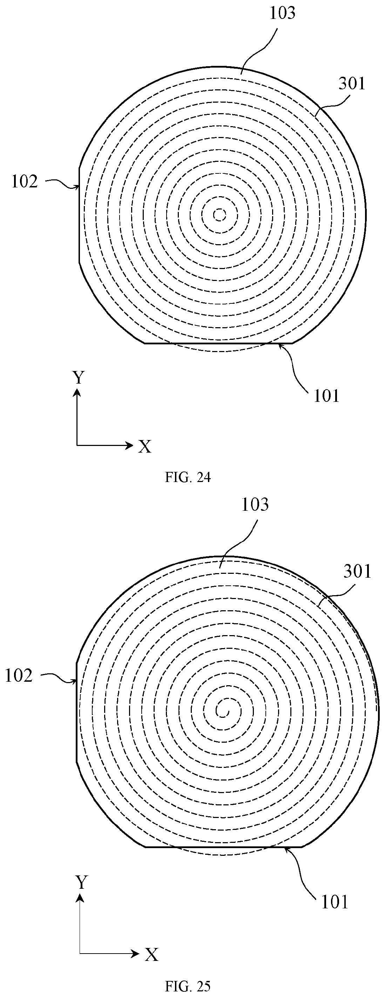

FIG. 23 is a schematic view of the processing effect of the first laser on the silicon carbide crystal along the first processing path according to another embodiment of the present disclosure. FIG. 24 is a schematic view of the processing effect of the first laser on the silicon carbide crystal along the first processing path according to yet another embodiment of the present disclosure. FIG. 25 is a schematic view of the processing effect of the first laser on the silicon carbide crystal along the first processing path according to yet another embodiment of the present disclosure. Referring to FIG. 23 to FIG. 25, the first path can be a straight-line path, a concentric-circle path, or a spiral path. Referring to FIG. 8, when the first path 301 is a straight-line path, the straight-line path can be parallel to the first positioning surface 101, or can be non-parallel to the first positioning surface 101.

The modified trace can be dots distributed at intervals along the first path or can be a continuous line (such as a straight line, a circular line, or a spiral line) along the first path.

In some embodiments, the first laser moves relative to the workpiece along the first path 301 and is focused inside the workpiece; and after completing the processing along the first path for the first time, the first laser changes rows, then moves relative to the workpiece along the first path and is continuously focused inside the workpiece (i.e., line-by-line scanning processing), to form modified traces inside the workpiece in different rows. That is, multiple rows of modified traces are formed inside the workpiece.

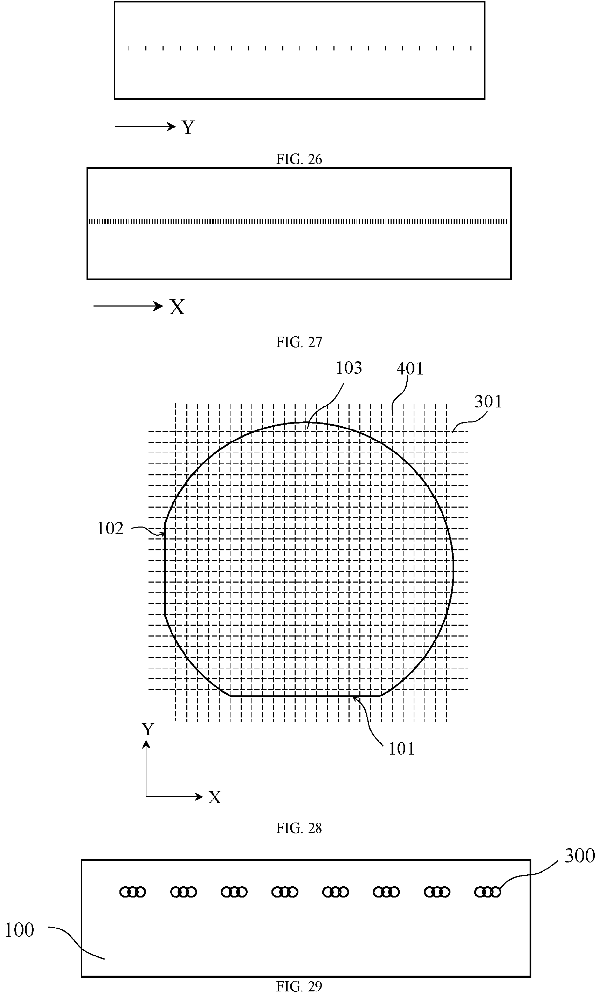

FIG. 26 illustrates distribution of modified traces in a Y-axis direction profile according to a set spacing. FIG. 27 is a schematic view of a profile of modified traces in an X-axis direction. For example, referring to FIG. 26 and FIG. 27, after completing the scanning process along the first path 301 for the first time, the first laser moves by a specified distance in a direction perpendicular to the first path 301 to change rows, so that the modified traces are arranged at a certain spacing to form multiple rows of modified traces 300, where a line spacing can range from 50 µm to 500 µm.

It should be understood that, when step A1 is implemented, the first laser can perform processing at the same position once or multiple times.

Step A2 of irradiating the modified traces with second laser to form absorption traces, so as to enable crack generation inside the workpiece can specifically include: moving the second laser relative to the workpiece along a second path and irradiating the modified traces with the second laser, then changing columns and continuously irradiating different modified traces along the second path, so as to enable crack generation inside the workpiece along the C-plane.

FIG. 28 is a schematic view of the processing effect of the second laser on the silicon carbide crystal along a second processing path according to an embodiment of the present disclosure. Referring to FIG. 10, FIG. 12, and FIG. 28, the second laser also has a wavelength that is relatively transparent to the silicon carbide crystal (i.e., the workpiece), and can be focused on the modified trace 300 generated with the first laser in the silicon carbide crystal (i.e., the workpiece). The depth of focus of the second laser is substantially the same as that of the first laser, and is equal to the thickness of the wafer required to be peeled from the silicon carbide crystal, in which there can be errors in actual processing.

The first laser and the second laser are different. Specifically, the parameters of the first laser (such as power, a pulse width, a spot size, a central wavelength, and a repetition frequency) are different from those of the second laser (such as power, a pulse width, a spot size, a central wavelength, and a repetition frequency), so that absorptance to the second laser in the modified trace is greater than absorptance to the second laser in the region outside the modified trace. The region outside the modified trace refers to a region of the workpiece not processed (i.e., irradiated) with the first laser. For the silicon carbide crystal, the region outside the modified trace is essentially monocrystalline silicon carbide crystal. As described above, the modified trace 300 is essentially polycrystalline silicon carbide crystal. Absorptance of the polycrystalline silicon carbide crystal to the second laser is greater than absorptance of the monocrystalline silicon carbide crystal to the second laser.

It should be understood that the parameters of the first laser and the parameters of the second laser can be partially different or wholly different.

For example, the first laser is pulsed laser with a first pulse width, the second laser is pulsed laser with a second pulse width, and the second pulse width is greater than the first pulse width. The second laser with the second pulse width irradiates the modified traces, for example, moves relative to the silicon carbide crystal (i.e., the workpiece) along a second path 401 and irradiates each modified trace, due to the difference in the absorptance, the processing effect of the second laser can be guided to positions of the modified traces formed with the first laser. Each modified trace 300 absorbs the second laser, and an absorption trace 400 is formed at the position of each modified trace 300 (for example, at an upper part or a middle part of the modified trace in a height direction), thereby forming one or more absorption traces 400 inside the workpiece.

The absorption trace 400 is a modified trace newly formed in the workpiece after the modified trace 300 absorbs the second laser. The absorption trace 400 includes polycrystalline silicon carbide crystal. When the second laser with higher power is used to irradiate the modified trace 300 to improve efficiency, the obtained absorption trace 400 is a modified trace with a larger size, which is specifically a modified trace with a larger transverse dimension. Alternatively, a transverse range of the absorption trace is greater than a transverse range of the modified trace. For example, along a transverse direction of the workpiece (such as the X-axis direction or the Y-axis direction), a transverse dimension (such as a diameter) of the absorption trace is greater than a transverse dimension of the modified trace. The transverse direction of the workpiece is perpendicular to the thickness direction of the workpiece. Along the thickness direction of the workpiece (such as the Z-axis direction), a longitudinal dimension of the absorption trace can be less than, greater than or substantially equal to that of the modified trace, which can be implemented by controlling the parameters of the second laser (such as power) according to an actual requirement.

In some embodiments, the second laser moves relative to the workpiece along the second path 401, and the second laser irradiates the modified traces 300 to form the absorption traces 400, then changes columns to continuously irradiate different modified traces 300 along the second path 401 to form the absorption traces 400.

Specifically, after completing the scanning process along the second path 401 for the first time, the second laser moves by a specified distance along a direction perpendicular to the second path 401 to change columns and continuously irradiates different modified traces 300 along the second path 401 to form a plurality of columns of absorption traces 400. The absorption traces 400 in adjacent columns are arranged at a certain spacing. The second path 401 can be a straight-line path or a polyline path.

Referring to FIG. 12, along with the appearance of the absorption traces, the cracks 500 can occur inside the silicon carbide crystal (i.e., the workpiece). Even if no crack is generated when the second laser irradiates the modified traces for the first time, when the second laser irradiates the absorption traces again to peel the workpiece or thin the workpiece, the cracks 500 can occur inside the silicon carbide crystal (i.e., the workpiece). Each crack 500 essentially starts to occur at the position of the corresponding modified trace 300 (e.g., around the absorption trace 400), with good consistency. The cracks 500 can be generated along the C-plane. Specifically, the cracks can be formed in multiple columns. Certainly, the absorption traces are optional, and the cracks 500 can be directly generated by irradiation of the modified traces 300 with the second laser.

Referring to FIG. 13, it should be understood that for silicon carbide, the cracks 500 can fluctuate up and down (somewhat like sea waves) with the C-plane as a center. The cracks 500 can be in various directions, for example, with the modified traces 300 as centers, the cracks are distributed around the centers.

It should be understood that the first laser and the second laser can be emitted by the same laser processing head; alternatively, the first laser can be emitted by one laser processing head and the second laser can be emitted by another laser processing head. The first laser and the second laser can be generated by the same laser device or by different laser devices.

According to the above content, the first laser moves relative to the silicon carbide crystal (i.e., the workpiece) along the first path and is focused inside the silicon carbide crystal (i.e., the workpiece) to form modified traces. The second laser moves relative to the silicon carbide crystal (i.e., the workpiece) along the second path, irradiates the modified traces, and changes columns to continuously irradiate different modified traces along the second path. The modified traces absorb the second laser, so that cracks can be generated inside the silicon carbide crystal (i.e., the workpiece) along the C-plane. Since the first path intersects the second path, an overlap can be formed inside the workpiece. Along a direction in which the second laser moves relative to the silicon carbide crystal (i.e., the workpiece), the crack can be generated at a first overlap between adjacent columns from the position of the first path, which is conducive to connecting the cracks in adjacent columns easily. For example, referring to FIG. 12, the crack on the C-plane 1C is connected to the crack on the C-plane 2C, the crack on the C-plane 2C is connected to the crack on the C-plane 3C, the crack on the C-plane 3C is connected to the crack on the C-plane 4C, the crack on the C-plane 4C is connected to the crack on the C-plane 5C, and the crack on the C-plane 5C is connected to the crack on the C-plane 6C. Thus, misalignment of the cracks in adjacent rows can be reduced, thereby improving consistency between the cracks.

The [1100] crystal orientation of the workpiece is called the first crystal orientation. The [11 00] crystal orientation is parallel to the C-plane (i.e., (0001) crystal plane) of the workpiece, and a normal plane of the [1100] crystal orientation (i.e., [1100] crystal plane) is perpendicular to the C-plane.

The step A2 of moving the second laser relative to the workpiece along the second path and irradiating the modified traces with the second laser can specifically include: moving the second laser relative to the workpiece along a direction at a first specified angle with the first crystal orientation (i.e., the [1 1̅ 00] crystal orientation) and irradiating the modified traces 300 with the second laser. Correspondingly, after changing columns, the second laser still continuously irradiates different modified traces 300 along the direction at the first specified angle with the first crystal orientation (i.e., the [1100] crystal orientation).

Referring to FIG. 14, specifically, taking a conductive silicon carbide crystal as an example, the influence of a laser scanning processing direction (i.e., a direction in which the laser moves relative to the workpiece) on the processing effect is discussed. For the conductive silicon carbide crystal, a cleavage plane thereof (i.e., C-plane) is inclined at 4° to an upper surface ① (parallel to the first surface 103) of the crystal and a lower surface ② (parallel to the first surface 103) of the crystal. The direction of the intersection line between the cleavage plane and the upper surface ① is parallel to the [1100] crystal orientation of the crystal.

Referring to FIG. 15, when laser is used to scan and process the crystalline material, if a laser scanning processing direction D2 is parallel to the [1100] crystal orientation of the crystalline material, a crack surface 9C (i.e., the C-plane with cracks fluctuating up and down) generated in the crystalline material due to laser scanning is parallel to the laser scanning processing direction D2. Along the laser scanning processing direction D2, the length of the longitudinal component of the crack changes relatively little.

Referring to FIG. 15, if a laser scanning processing direction D2' is not parallel to the [1100] crystal orientation of the crystalline material, the crack surface 9C (i.e., the C-plane with cracks fluctuating up and down) generated in the crystalline material due to the laser scanning is not parallel to the laser scanning processing direction D2'. Subsequent laser will irradiate the crack surface 9C generated along the laser scanning processing direction D2' but inclined relative to the scanning processing direction D2', thereby causing the crack surface 9C to extend to a higher position. As a result, the length of the longitudinal component of the crack can gradually increase along the laser scanning processing direction, leading to a large fluctuation of the peeling surface, and resulting in an increase in the roughness of the peeling surface, thereby causing an increase in an external force required for peeling. Meanwhile, more materials are required to be ground off during subsequent grinding and polishing.

In order to prevent excessive fluctuation of the length of the longitudinal component of the crack along the laser scanning processing direction, one solution is to make the laser scanning processing direction completely coincide with the [1100] crystal orientation of the crystal. However, in the solution, in order to confirm the [1100] crystal orientation, an additional crystal orientation device is required, and extremely high requirements are placed on movement accuracy of a processing platform, which makes implementation very difficult.

Referring to FIG. 12 and FIG. 28, according to the laser processing method provided in the embodiments of the present disclosure, the first laser moves relative to the workpiece along the first path and is focused inside the workpiece, the first laser changes rows and is continuously focused inside the workpiece along the first path, to form a plurality of rows of modified traces 300 inside the workpiece. The second laser irradiates the silicon carbide crystal (i.e., the workpiece). Since the absorptance to the second laser in the modified traces 300 is greater than absorptance to the second laser in the region outside the modified traces, the second laser is absorbed by the modified traces 300 to form the absorption traces 400, thereby enabling the generation of the cracks 500 inside the workpiece. Due to the difference in absorptance, the processing effect of the second laser can be guided to the position of the modified trace 300 formed with the first laser, so that the crack 500 can be essentially generated at the position of the corresponding modified trace 300. Moreover, microcracks exist near the modified trace, and the microcracks can change stress distribution near a tip end of the crack generated by irradiation of the current modified trace by the second laser. Even if the scanning processing direction D2 of the second laser has a deviation angle (such as a first specified angle) with the [1100] crystal orientation of the silicon carbide crystal, the microcracks can guide the tip end of the crack to develop towards the next modified trace, and the length of the longitudinal component of the crack can be controlled. Allowing the scanning processing direction D2 of the second laser to have the deviation angle (such as the first specified angle) with the [1100] crystal orientation of the silicon carbide crystal can reduce the requirement for crystal orientation capability during the processing, thereby reducing the difficulty of implementation. A piece of material can be peeled from the workpiece with less force later, which can reduce the material removal amount of the crystalline material (such as a silicon carbide crystalline material) during the grinding and polishing, thereby being applicable to an off-axis grown crystalline material (or referred to as an off-axis crystalline material), and reducing requirements for the crystal orientation and crystal uniformity of the crystalline material.

According to practical results, the first specified angle is greater than 0° and less than or equal to 20°, so that the longitudinal dimension of the crack is relatively small. When the first specified angle is greater than 20°, the modified trace generated by the first laser inside the silicon carbide crystal can have a relatively reduced guiding effect on the second laser, and the limitation on the length of the longitudinal component of the crack can also be relatively reduced.

Certainly, according to an actual situation, the second laser can alternatively move relative to the crystalline material in a direction at the first specified angle with another crystal orientation (such as the [1120] crystal orientation) and irradiate the modified trace 300.

Referring to FIG. 12 and FIG. 28, when the first path 301 is perpendicular to the second path 401, for example, the first path 301 and the second path 401 are straight-line paths, the second path 401 overlaps with the modified traces 300, and a grid-like processing trace is formed inside the silicon carbide crystal (i.e., the workpiece). The grid has many overlaps and the overlaps are in various directions, which can control the lengths of the longitudinal components of the cracks at various positions and in various directions, and can make the lengths of the longitudinal components of the cracks less volatile along the laser scanning processing direction, thereby better improving the processing quality.

In addition, referring to FIG. 12 and FIG. 28, when the first path 301 is perpendicular to the second path 401, the first overlap between adjacent columns can be directly opposite to a direction perpendicular to the direction of movement of the second laser, where the remaining overlaps are also in direct one-to-one opposition. The cracks caused by the modification of the crystalline material due to laser scanning are mainly located on two sides of the laser scanning processing direction. The cracks generated at the first overlap between adjacent columns can also tend to be more directly opposite in the direction perpendicular to the direction of movement of the second laser, making it easier for the cracks in adjacent columns to be connected.

Certainly, the second laser can also move relative to the workpiece in a direction parallel to the first crystal orientation (i.e., the [1100] crystal orientation), and the second laser irradiates the modified traces. Correspondingly, after changing columns, the second laser also continuously irradiates different modified traces 300 along a direction parallel to the first crystal orientation (i.e., the [1100] crystal orientation).

As described above, the crystalline material has the first positioning surface 101, and the first positioning surface 101 is used to determine the crystal orientation of the crystalline material. For a general crystalline material (such as a cylindrical silicon carbide ingot), the first positioning surface 101 is perpendicular to the first crystal orientation (i.e., the [1100] crystal orientation), and the first positioning surface 101 is perpendicular to the second positioning surface 102.

Step A1 of moving the first laser relative to the workpiece along a first path and focusing the first laser inside the workpiece can specifically include: moving the first laser relative to the workpiece along a direction at a second specified angle to the first positioning surface 101 and focusing the first laser inside the workpiece. Correspondingly, after changing rows, the first laser is also continuously focused inside the workpiece along the direction at the second specified angle to the first positioning surface 101.

It should be understood that the second specified angle is not limited as long as the first path intersects the second path.

The first positioning surface 101 is a solid surface of the crystalline material (such as the cylindrical silicon carbide ingot). The scanning processing direction of the first laser is determined with reference to the first positioning surface 101, which is easier to operate in practical applications.

As described above, the crystalline material has the second positioning surface 102, and the second positioning surface 102 is used to determine the crystal orientation of the crystalline material. The second positioning surface 102 is parallel to the first crystal orientation (i.e., the [1100] crystal orientation).

The moving the second laser relative to the workpiece along the direction at the first specified angle with the first crystal orientation and irradiating the modified traces with the second laser can specifically include: moving the second laser relative to the workpiece along a direction at the first specified angle to the second positioning surface 102 and irradiating the modified traces 300 with the second laser. Correspondingly, after changing columns, the second laser also continuously irradiates different modified traces 300 along the direction at the first specified angle to the second positioning surface 102.

Since the [1100] crystal orientation is parallel to the second positioning surface 102, the direction at the first specified angle with the [1100] crystal orientation is the direction at the first specified angle to the second positioning surface 102. The first specified angle is greater than 0° and less than or equal to 20°.

The second positioning surface 102 is a solid surface of the crystalline material (such as the cylindrical silicon carbide ingot). The scanning processing direction of the second laser is determined with reference to the second positioning surface 102, which is easier to operate in practical applications. Step A1 of moving the first laser relative to the workpiece along a first path and focusing the first laser inside the workpiece to form the modified traces inside the workpiece can specifically include: moving the first laser relative to the workpiece along the first path in an intermittent manner and focusing the first laser inside the workpiece to form spaced modification points inside the workpiece or form overlapping modification points inside the workpiece.

The first laser moves relative to the workpiece along the first path 301 in an intermittent manner and is focused inside the workpiece. The modified traces formed inside the workpiece are distributed along the first path 301. The modified traces can specifically be a plurality of independent points or a plurality of overlapping points. When the modified traces are a plurality of independent points, the points are arranged at a small spacing along the first path, where the spacing is generally less than 10 µm.

For example, the laser processing head moves relative to the silicon carbide crystal (i.e., the workpiece) along the first path 301 to a processing position and emits the first laser, and the first laser is focused inside the silicon carbide crystal (i.e., the workpiece) to process the silicon carbide crystal (i.e., the workpiece). After the processing is completed at the current processing position, the laser processing head stops emitting the first laser and continuously moves along the first path relative to the silicon carbide crystal (i.e., the workpiece) to a next processing position (in which there is a gap between two adjacent processing positions), and then emits the first laser to process the silicon carbide crystal (i.e., the workpiece). This process is repeated, so that a plurality of points (in which there is a gap between two adjacent points) can be distributed along the first path 301 inside the silicon carbide crystal (i.e., the workpiece). That is, the formed modified traces are a plurality of independent points. FIG. 29 is a schematic view of modified traces according to another embodiment of the present disclosure. Referring to FIG. 29, when two adjacent processing positions overlap, the formed modified traces are a plurality of overlapping points. Specifically, N overlapping points are taken as a group, where N is an integer greater than or equal to 2, and there is a gap between two groups of points.

Step A1 of moving the first laser relative to the workpiece along a first path and focusing the first laser inside the workpiece to form the modified traces inside the workpiece can specifically include: continuously moving the first laser relative to the workpiece along the first path and focusing the first laser inside the workpiece to form a modified line inside the workpiece.

For example, the laser processing head moves relative to the silicon carbide crystal (i.e., the workpiece) along the first path and emits the first laser, the first laser is focused inside the silicon carbide crystal (i.e., the workpiece) and processes the silicon carbide crystal (i.e., the workpiece) along the first path, and a linear modified structure (i.e., a modified line) distributed along the first path is formed inside the silicon carbide crystal (i.e., the workpiece).

According to the laser processing method provided in the embodiments of the present disclosure, consistency between the cracks can be improved, fluctuations (represented by a total thickness variation, TTV) of the peeling surface caused by off-axis growth of the crystalline material (such as the silicon carbide crystalline material) can be effectively reduced, and a smoother peeling surface can be obtained. The smooth peeling surface can be peeled with less force. Meanwhile, the smoother peeling surface results in a smaller laser damage layer, which can reduce the material removal amount of the crystalline material (such as the silicon carbide crystalline material) during the grinding and polishing. Requirements for the crystal orientation and crystal uniformity of the crystalline material (such as the silicon carbide crystalline material) are relatively low, which is more conducive to implementation during industrialization, and can improve production efficiency and reduce costs, thereby being suitable to slicing silicon carbide ingots and thinning silicon carbide devices.

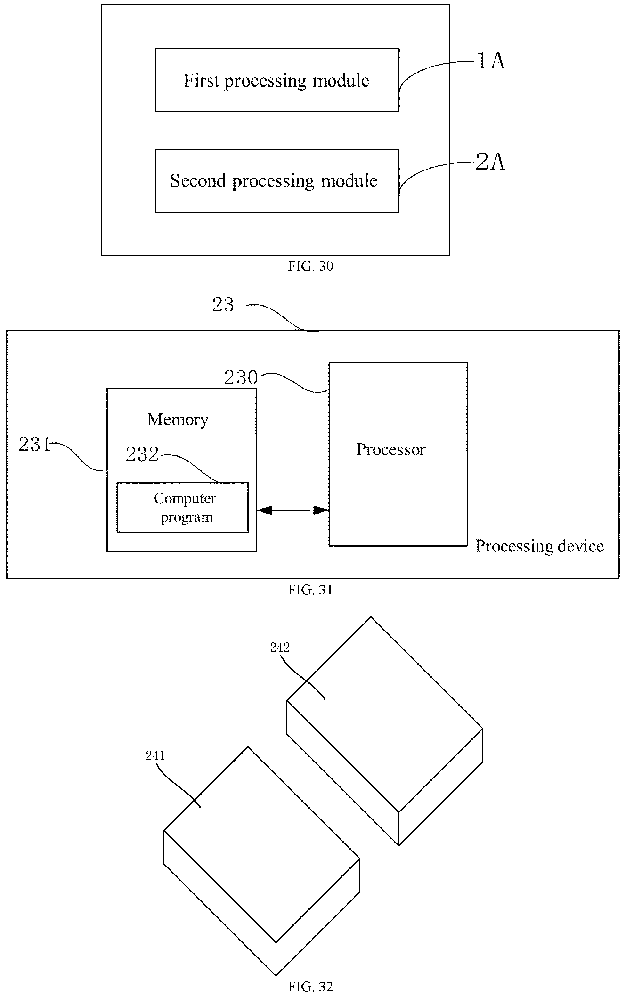

Corresponding to the method in the foregoing embodiments, FIG. 30 is a schematic structural view of a laser processing apparatus according to an embodiment of the present disclosure. To facilitate the description, only the parts related to the embodiments of the present disclosure are shown.

Referring to FIG. 30, the apparatus includes a first processing module 1A and a second processing module 2A.

The first processing module 1A is configured to focus first laser inside a workpiece to form one or more modified traces inside the workpiece.

The second processing module 2A is configured to irradiate the modified traces with second laser to form absorption traces, so as to enable crack generation inside the workpiece.

Absorptance to the second laser in the modified traces is greater than absorptance to the second laser in the region outside the modified traces.

In some embodiments, the first processing module 1A is specifically configured to move the first laser relative to the workpiece along a first path and focus the first laser inside the workpiece to form the modified traces inside the workpiece.

The second processing module 2A is specifically configured to move the second laser relative to the workpiece along a second path, irradiate the modified traces with the second laser and change columns to continuously irradiate different modified traces along the second path to form absorption traces, so as to enable crack generation inside the workpiece along the C-plane.

The first laser and the second laser are different.

The first path intersects the second path.

In some embodiments, the workpiece further has a first positioning surface, the first positioning surface being perpendicular to the crystal orientation of the workpiece; and the first processing module 1A is specifically configured to move the first laser relative to the workpiece along a direction at a second specified angle to the first positioning surface.

In some embodiments, the workpiece further has a second positioning surface, the second positioning surface being parallel to the crystal orientation of the workpiece; and the second processing module 2A is specifically configured to move the second laser relative to the workpiece along a direction at the first specified angle to the second positioning surface and irradiate the modified traces with the second laser.

In some embodiments, peak power density of the second laser is outside a peak power density range capable of independently inducing nonlinear absorption in the region outside the modified trace.

In some embodiments, the second processing module 2A is specifically configured to move the second laser relative to the workpiece along a direction at a first specified angle with [1100] crystal orientation and irradiate the modified traces with the second laser to form the absorption traces, so as to enable crack generation inside the workpiece.

In some embodiments, the first processing module 1A is specifically configured to move the first laser relative to the workpiece and focus the first laser inside the workpiece to form one or more modified traces inside the workpiece.

In some embodiments, the second processing module 2A is specifically configured to move the second laser relative to the workpiece and irradiate the modified traces with the second laser to form the absorption traces, so as to enable crack generation inside the workpiece.

In some embodiments, the first processing module 1A is specifically configured to move the first laser relative to the workpiece along the first path and focus the first laser inside the workpiece to form one or more modified traces inside the workpiece.

The second processing module 2A is specifically configured to move the second laser relative to the workpiece along the first path and irradiate the modified traces with the second laser to form the absorption traces, so as to enable crack generation inside the workpiece.

In some embodiments, the second processing module 2A is specifically configured to move the second laser relative to the workpiece along a specified direction and irradiate a part of the modified traces with the second laser to form absorption traces, then change rows and move the second laser relative to the workpiece along a direction parallel to the specified direction and irradiate another part of the modified traces with the second laser to form absorption traces, so as to enable crack generation inside the workpiece.

In some embodiments, the second processing module 2A is specifically configured to cause the second laser to irradiate the modified traces multiple times in an intermittent manner to form the absorption traces, so as to enable crack generation inside the workpiece.

In some embodiments, the second processing module 2A is specifically configured to cause multiple laser pulses of the second laser to successively irradiate the modified traces to form the absorption traces, so as to enable crack generation inside the workpiece.

In some embodiments, the second processing module 2A is specifically configured to move the second laser relative to the workpiece multiple times along a same path and irradiate the modified traces with the second laser to form the absorption traces, so as to enable crack generation inside the workpiece.

It is to be noted that, since content such as information interaction and an execution process between the above apparatuses/units are based on the same concept as the method embodiments of the present disclosure, specific functions and technical effects thereof can be obtained with reference to the method embodiments, which are not described in detail herein again.

Embodiments of the present disclosure further provide a device. The device is manufactured with the laser processing method provided in any one of the above embodiments. The device can be a silicon carbide wafer or a silicon carbide device. The device includes the modified traces and the absorption traces. A range of the absorption trace is greater than that of the modified trace. For example, along a transverse direction of the device, a transverse dimension of the absorption trace is greater than that of the modified trace. Along a height direction of the device, a longitudinal dimension of the absorption trace is substantially equal to that of the modified trace.

Intersecting processing traces (such as grid-like processing traces) can be formed on a processing surface of the device.

Embodiments of the present disclosure further provide a device. The device can be a silicon carbide wafer or a silicon carbide device. The device includes the modified traces 300, the absorption traces 400, and the cracks 500.

The modified traces 300 are formed by focusing first laser inside a workpiece.

The cracks 500 are formed inside the workpiece by irradiating the modified traces 300 with second laser to form the absorption traces 400. The cracks 500 can specifically be located around the absorption traces 400.

As described above, absorptance to the second laser in the modified traces 300 is greater than absorptance to the second laser in a region outside the modified traces.

FIG. 31 is a schematic structural view of a processing device according to an embodiment of the present disclosure. As shown in FIG. 31, a processing device 23 in the embodiment includes: at least one processor 230 (only one is shown in FIG. 31), a memory 231, and a computer program 232 stored in the memory 231 and executable on at least one processor 230. The processor 230, when executing the computer program 232, implements steps in any one of the method embodiments.

The processing device 23 can include, but is not limited to, the processor 230 and the memory 231. Those skilled in the art can understand that FIG. 31 is merely an example of the processing device and does not constitute a limitation on the processing device, which can include more or fewer components than those illustrated, or a combination of some components, or different components, and can further include, for example, an input/output device, a network access device, a bus, and the like.

The processor 230 can be a central processing unit (CPU). The processor 230 can alternatively be another general-purpose processor, a digital signal processor (DSP), an application specific integrated circuit (ASIC), a field-programmable gate array (FPGA) or another programmable logic device, a discrete gate or a transistor logic device, a discrete hardware component, or the like. The general-purpose processor can be a microprocessor, or the processor can be any conventional processor or the like.

The memory 231 can be an internal storage unit of the processing device 23 in some embodiments, for example, a hard disk or an internal memory of the processing device. The memory 231 can alternatively be an external storage device of the processing device in some other embodiments, for example, a plug-in hard disk, a smart media card (SMC), a secure digital (SD) card, a flash card, or the like configured on the processing device. Further, the memory 231 can further include both the internal storage unit and the external storage device of the processing device. The memory 231 is configured to store an operating system, an application program, a boot loader program, data, and another program, for example, program code of the computer program. The memory 231 can also be configured to temporarily store data that has been outputted or is to be outputted.

For example, the computer program 232 can be divided into one or more modules/units, and the one or more modules/units are stored in the memory 231 and executed by the processor 230 to complete the present disclosure. The one or more modules/units can be a series of computer program instruction segments that can perform specific functions. The instruction segments are used to describe an execution process of the computer program 232 in the processing device 23.

FIG. 32 is a schematic structural view of a crystalline material peeling device according to an embodiment of the present disclosure. Referring to FIG. 32, embodiments of the present disclosure further provide a crystalline material peeling device configured to peel a crystalline material or thin the crystalline material. The crystalline material can be silicon carbide or gallium nitride.

Referring to FIG. 32, the crystalline material peeling device provided in the embodiments of the present disclosure includes an irradiation unit 241 and a peeling unit 242.

The irradiation unit 241 is configured to emit first laser to be focused inside a crystalline material to form one or more modified traces 300 inside the crystalline material, and configured to emit second laser to irradiate the modified traces 300 to form absorption traces 400, so as to enable crack 500 generation inside the crystalline material. Absorptance to the second laser in the modified traces 300 is greater than absorptance to the second laser in a region outside the modified traces.

The peeling unit 242 is configured to peel off a wafer from the crystalline material by using the crack 500 as a starting point, thereby achieving peeling of the crystalline material or reducing the thickness of the crystalline material. The wafer can be a crystalline wafer, or can denote a thin slice of waste material produced during thinning the crystalline material.

In some embodiments, the irradiation unit 241 is specifically configured to emit first laser, move the first laser relative to a crystalline material along a first path and focus the first laser inside the crystalline material to form the modified traces 300 inside the crystalline material; and to emit second laser, move the second laser relative to the crystalline material along a second path, irradiate the modified traces 300 with the second laser to form absorption traces 400, change columns and continuously irradiate different modified traces with the second laser along the second path to form absorption traces 400, so as to enable crack 500 generation inside the crystalline material along a C-plane.

The first laser and the second laser are different. The first path intersects the second path.

The peeling unit 242 is specifically configured to peel off a wafer from the crystalline material by using the crack 500 as a starting point, thereby achieving peeling of the crystalline material or thinning the crystalline material.

The irradiation unit 241 can include the first processing module 1A and the second processing module 2A.

It should be understood that sequence numbers of the foregoing processes do not mean execution sequences in various embodiments. The execution sequences of the processes should be determined according to functions and internal logic of the processes, and should not be construed as any limitation on the implementation processes of the embodiments of the present disclosure.

It can be clearly understood by those skilled in the art that, for convenient and brief description, division of the foregoing functional units and modules is used as an example for illustration. In practical application, the foregoing functions can be allocated to different functional units and modules and implemented as required, that is, an internal structure of the apparatus is divided into different functional units or modules to accomplish all or some of the functions described above. The functional units or modules in the embodiments can be integrated into one processing unit, or each of the units can exist alone physically, or two or more units are integrated into one unit. The integrated unit or module can be implemented in a form of hardware, or can also be implemented in a form of a software functional unit. In addition, specific names of all the functional units or modules are merely for facilitating mutual differentiation, but are not intended to limit the protection scope of the present disclosure. For specific operating processes of the units or modules in the foregoing system, reference can be made to the corresponding process in the foregoing method embodiments, which is not described in detail herein again.

If the integrated units are realized in a form of functional software units and are sold or used as separate products, the integrated units can be stored in a computer-readable storage medium. Based on this understanding, all or a part of the processes in the above method embodiments of the present disclosure can be implemented by relevant hardware instructed by a computer program. The computer program can be stored in a computer-readable storage medium. When the computer program is executed by the processor, steps in the above method embodiments can be implemented. The computer program includes computer program code. The computer program code can be in a source code form, an object code form, an executable file, some intermediate forms, or the like. The computer-readable medium includes any entity or apparatus that can carry the computer program code to an apparatus/terminal device, a recording medium, a computer memory, a read-only memory (ROM), a random-access memory (RAM), an electrical carrier signal, a telecommunications signal, a software distribution medium, and the like, for example, a USB flash drive, a removable hard disk, a magnetic disk, an optical disc, or the like. In some jurisdictions, according to the legislation and patent practice, the computer-readable medium cannot be an electrical carrier signal and a telecommunications signal.

Embodiments of the present disclosure further provide a computer-readable storage medium. The computer-readable storage medium stores a computer program. When the computer program is executed by a processor, steps in the method embodiments as described above can be implemented.

Embodiments of the present disclosure provide a computer program product. The computer program product, when run on a terminal device, causes the terminal device to implement the steps in the method embodiments as described above.

In the foregoing embodiments, the descriptions of the embodiments have respective focuses. For a part that is not described in detail in an embodiment, reference can be made to related descriptions in other embodiments.

Those of ordinary skill in the art can be aware that, in combination with the examples described in embodiments disclosed herein, units and algorithm steps can be implemented by electronic hardware or a combination of computer software and electronic hardware. Whether the functions are performed by hardware or software depends on specific applications and design constraint conditions of the technical solutions. Those skilled in the art can use different methods to implement the described functions for each specific application, but it should not be considered that the implementation goes beyond the scope of the present disclosure.

In the embodiments provided in the present disclosure, it should be understood that the disclosed apparatus/device and method can be implemented in other manners. For example, the apparatus/device embodiment described above is merely an example. For example, the division of the module or unit is merely logical function division and there can be another division method when it is implemented actually. For example, a plurality of units or components can be combined or integrated into another system, or some features can be ignored or not performed. In addition, the displayed or discussed mutual couplings or direct couplings or communication connections can be implemented through some interfaces. The indirect couplings or communication connections between the apparatuses or units can be implemented in electronic, mechanical, or other forms.

The units described as separate parts can or cannot be physically separate, and parts displayed as units can or cannot be physical units. That is, they can be in one position, or can be distributed on a plurality of network units. Some or all of the units can be selected based on actual requirements to achieve the objectives of the solutions of the present embodiments.

The foregoing embodiments are merely intended for describing the technical solutions of the present disclosure, but not for limiting the present disclosure. Although the present disclosure is described in detail with reference to the foregoing embodiments, those of ordinary skill in the art should understand that they can still make modifications to the technical solutions described in the foregoing embodiments or make equivalent replacements to some technical features thereof. Such modifications or replacements do not cause the essence of the corresponding technical solutions to depart from the spirit and scope of the technical solutions of the embodiments of the present disclosure and all fall within the protection scope of the present disclosure.

## Claims

1. A laser processing method, comprising:
focusing first laser inside a workpiece to form one or more modified traces inside the workpiece; and
irradiating the modified traces with second laser to form absorption traces, so as to enable crack generation inside the workpiece;
absorptance to the second laser in the modified traces is greater than absorptance to the second laser in a region outside the modified traces.

2. The laser processing method according to claim 1, wherein the workpiece has a C-plane;
focusing the first laser inside the workpiece to form one or more modified traces inside the workpiece comprises:
moving the first laser relative to the workpiece along a first path and focusing the first laser inside the workpiece to form the modified traces inside the workpiece;
irradiating the modified traces with the second laser to form absorption traces, so as to enable crack generation inside the workpiece comprises:
moving the second laser relative to the workpiece along a second path, irradiating the modified traces with the second laser to form the absorption traces, and changing columns and continuously irradiating different modified traces with the second laser along the second path to form the absorption traces, so as to enable crack generation inside the workpiece along the C-plane;
the first laser and the second laser are different; and
the first path intersects the second path.

3. The laser processing method according to claim 2, wherein the workpiece is a crystalline material having a crystal orientation;
moving the second laser relative to the workpiece along the second path comprises:
moving the second laser relative to the workpiece along a direction parallel to the crystal orientation; or
moving the second laser relative to the workpiece along a direction at a first specified angle to the crystal orientation.

4. The laser processing method according to claim 3, wherein the workpiece further comprises a first positioning surface, the first positioning surface being perpendicular to the crystal orientation;
moving the first laser relative to the workpiece along the first path comprises:
moving the first laser relative to the workpiece along a direction at a second specified angle to the first positioning surface.

5. The laser processing method according to claim 3, wherein the workpiece further comprises a second positioning surface, the second positioning surface being parallel to the crystal orientation;
moving the second laser relative to the workpiece along the direction at the first specified angle to the crystal orientation comprises: moving the second laser relative to the workpiece along a direction at the first specified angle to the second positioning surface.

6. The laser processing method according to claim 3, wherein the crystal orientation is [1 1̅ 00] crystal orientation; and the first specified angle is greater than 0° and less than or equal to 20°.

7. The laser processing method according to claim 2, wherein the first path comprises a straight-line path, a concentric-circle path, or a spiral path; and
the second path comprises a straight-line path or a polyline path.

8. The laser processing method according to claim 2, wherein the first path is perpendicular to the second path.

9. The laser processing method according to claim 1, wherein peak power density of the second laser is outside a peak power density range capable of independently inducing nonlinear absorption in the region outside the modified traces.

10. The laser processing method according to claim 1, wherein along a transverse direction of the workpiece, a transverse dimension of the absorption trace is greater than a transverse dimension of the corresponding modified trace, the transverse direction being perpendicular to a thickness direction of the workpiece.

11. The laser processing method according to claim 1, wherein the workpiece is a crystalline material having a crystal orientation;
irradiating the modified traces with the second laser to form the absorption traces, so as to enable crack generation inside the workpiece specifically comprises:
moving the second laser relative to the workpiece along a direction at a first specified angle to the crystal orientation and irradiating the modified traces with the second laser to form the absorption traces, so as to enable crack generation inside the workpiece.

12. The laser processing method according to claim 11, wherein the crystalline material is an off-axis crystalline material; and the crystal orientation is [1100] crystal orientation; and the first specified angle is greater than 0° and less than or equal to 20°.

13. The laser processing method according to claim 1, wherein focusing the first laser inside the workpiece to form one or more modified traces inside the workpiece specifically comprises:
moving the first laser relative to the workpiece and focusing the first laser inside the workpiece to form one or more modified traces inside the workpiece;
irradiating the modified traces with the second laser to form absorption traces, so as to enable crack generation inside the workpiece specifically comprises:
moving the second laser relative to the workpiece and irradiating the modified traces with the second laser to form the absorption traces, so as to enable crack generation inside the workpiece.

14. The laser processing method according to claim 13, wherein along a direction in which the second laser moves relative to the workpiece, two adjacent regions irradiated with a focal point of the second laser have an overlapping part, so that a crack is generated in a region between two absorption traces.

15. The laser processing method according to claim 14, wherein along the direction in which the second laser moves relative to the workpiece, at least one region irradiated with the focal point of the second laser exists between the two absorption traces.

16. The laser processing method according to claim 13, wherein along a direction in which the first laser moves relative to the workpiece, a gap between two adjacent modified traces is smaller than a spot size of a focal point of the second laser.

17. The laser processing method according to claim 13, wherein moving the first laser relative to the workpiece and focusing the first laser inside the workpiece to form the one or more modified traces inside the workpiece specifically comprises:
moving the first laser relative to the workpiece along a first path and focusing the first laser inside the workpiece to form the one or more modified traces inside the workpiece;
moving the second laser relative to the workpiece and irradiating the modified traces with the second laser to form the absorption traces, so as to enable crack generation inside the workpiece specifically comprises:
moving the second laser relative to the workpiece along the first path and irradiating the modified traces with the second laser to form the absorption traces, so as to enable crack generation inside the workpiece.

18. The laser processing method according to claim 13, wherein moving the second laser relative to the workpiece and irradiating the modified traces with the second laser to form the absorption traces, so as to enable crack generation inside the workpiece specifically comprises:
moving the second laser relative to the workpiece along a specified direction and irradiating a part of the modified traces with the second laser to form absorption traces, changing rows, and moving the second laser relative to the workpiece along a direction parallel to the specified direction and irradiating another part of the modified traces with the second laser to form absorption traces, so as to enable crack generation inside the workpiece.

19. The laser processing method according to claim 1, wherein irradiating the modified traces with the second laser to form absorption traces, so as to enable crack generation inside the workpiece specifically comprises:
irradiating the modified traces with the second laser multiple times in an intermittent manner to form the absorption traces, so as to enable crack generation inside the workpiece.

20. The laser processing method according to claim 19, wherein irradiating the modified traces with the second laser multiple times in an intermittent manner to form the absorption traces, so as to enable crack generation inside the workpiece specifically comprises:
successively irradiating the modified traces with multiple laser pulses of the second laser to form the absorption traces, so as to enable crack generation inside the workpiece; or
moving the second laser relative to the workpiece multiple times along a same path and irradiating the modified traces with the second laser to form the absorption traces, so as to enable crack generation inside the workpiece.

21. The laser processing method according to claim 1, wherein the first laser is pulsed laser with a first pulse width, and the second laser is pulsed laser with a second pulse width, the second pulse width being greater than the first pulse width.

22. The laser processing method according to any one of claims 1 to 21, wherein the workpiece is a silicon carbide ingot having a C-plane; the silicon carbide ingot being an off-axis silicon carbide ingot; the cracks are distributed along the C-plane; the modified traces comprise polycrystalline silicon carbide crystals; the region outside the modified traces is a region of the workpiece that is not irradiated with the first laser; and the region outside the modified traces is essentially monocrystalline silicon carbide crystal.

23. A laser processing apparatus, comprising:
a first processing module configured to focus first laser inside a workpiece to form one or more modified traces inside the workpiece; and
a second processing module configured to irradiate the modified traces with second laser to form absorption traces, so as to enable crack generation inside the workpiece;
absorptance to the second laser in the modified traces being greater than absorptance to the second laser in a region outside the modified traces.

24. A device, manufactured by the laser processing method according to any one of claims 1 to 22.

25. The device according to claim 24, wherein the device has the modified traces and the absorption traces; and
along a transverse direction of the workpiece, a transverse dimension of the absorption trace is greater than a transverse dimension of the corresponding modified trace, the transverse direction being perpendicular to a thickness direction of the workpiece.

26. The device according to claim 24, wherein the device has intersecting processing traces.

27. A device, having modified traces, absorption traces, and cracks;
the modified traces being formed by focusing first laser inside a workpiece;
by irradiating the modified traces with second laser to form the absorption traces, the cracks thereby being generated inside the workpiece; and
absorptance to the second laser in the modified traces being greater than absorptance to the second laser in a region outside the modified traces.

28. A processing device, comprising a memory, a processor, and a computer program stored in the memory and executable on the processor, when the processor executes the computer program, the laser processing method according to any one of claims 1 to 22 is implemented.

29. A crystalline material peeling device, comprising:
an irradiation unit configured to emit first laser and focus the first laser inside a crystalline material to form one or more modified traces inside the crystalline material, and configured to emit second laser to irradiate the modified traces to form absorption traces, so as to enable crack generation inside the crystalline material,
absorptance to the second laser in the modified traces being greater than absorptance to the second laser in a region outside the modified traces; and
a peeling unit configured to peel off a wafer from the crystalline material by using the cracks as a starting point.

30. A computer-readable storage medium having a computer program stored therein, the computer program, when executed by a processor, implementing the laser processing method according to any one of claims 1 to 22.
